(19) Europäisches Patentamt
European Patent Office
Office européen des brevets

(11) **EP 3 582 500 B1**

(12) **FASCICULE DE BREVET EUROPEEN**

(45) Date de publication et mention de la délivrance du brevet:
**09.02.2022 Bulletin 2022/06**

(21) Numéro de dépôt: **19180079.6**

(22) Date de dépôt: **13.06.2019**

(51) Classification Internationale des Brevets (IPC):
*H04N 19/149* (2014.01)  *H04N 21/234* (2011.01)
*H04N 21/2343* (2011.01)  *H04N 19/102* (2014.01)
*H04N 19/117* (2014.01)  *H04N 19/14* (2014.01)
*H04N 19/137* (2014.01)  *H04N 19/17* (2014.01)
*H04N 19/587* (2014.01)  *H04N 19/59* (2014.01)

(52) Classification Coopérative des Brevets (CPC):
**H04N 19/117; H04N 19/102; H04N 19/137; H04N 19/14; H04N 19/149; H04N 19/17; H04N 19/587; H04N 19/59; H04N 21/23418; H04N 21/23439**

(54) **PROCÉDÉ, SYSTEME ET PROGRAMME INFORMATIQUE D'ANALYSE DE LA COMPLEXITÉ D'UN CONTENU MULTIMÉDIA SOURCE POUR UNE DIFFUSION À LA DEMANDE**

VERFAHREN, SYSTEM UND COMPUTERPROGRAMM ZUR ANALYSE DER KOMPLEXITÄT EINES QUELLEN-MULTIMEDIAINHALTS FÜR EINE SENDUNG AUF ANFRAGE

METHOD, SYSTEM AND COMPUTER PROGRAM FOR ANALYSING THE COMPLEXITY OF MULTIMEDIA CONTENT FOR ON-DEMAND BROADCAST

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.06.2018 FR 1855193**

(43) Date de publication de la demande:
**18.12.2019 Bulletin 2019/51**

(73) Titulaire: **ATEME**
**78140 Velizy Villacoublay (FR)**

(72) Inventeur: **GUIONNET, Thomas**
**35000 RENNES (FR)**

(74) Mandataire: **Plasseraud IP**
**66, rue de la Chaussée d'Antin**
**75440 Paris Cedex 09 (FR)**

(56) Documents cités:
**WO-A2-2006/099082    WO-A2-2014/133745**

• **Zhan Ma ET AL: "Rate Model for Compressed Video Considering Impacts Of Spatial, Temporal and Amplitude Resolutions and Its Applications for Video Coding and Adaptation", , 12 juin 2012 (2012-06-12), XP055554344, Extrait de l'Internet: URL:https://arxiv.org/pdf/1206.2625.pdf**
• **G Hervouet ET AL: "Video Quality Optimization - Multi-rate Video Encoding: Best Practices Recommendations for Optimized Encoding Resolution Contents", , 1 juillet 2010 (2010-07-01), XP055272436, Extrait de l'Internet: URL:http://telcogroup.ru/files/materials-p df/DVB_standards/IPTV/wp_multires_encoding . pdf [extrait le 2016-05-12]**

## Description

Le domaine de l'invention se rapporte à l'analyse de la complexité d'un contenu multimédia source en vue d'une diffusion à la demande, notamment en direct, à au moins un terminal de réception. En particulier, l'analyse de la complexité permet par la suite de sélectionner des profils d'encodage, ou profils de compression, du contenu multimédia source.

Au cours des dernières années, la distribution de la télévision numérique a connu plusieurs évolutions. De nouveaux services audiovisuels tels que la vidéo à la demande (VOD) ou la télévision de rattrapage (Catch-Up TV) se sont développés et ont conduit au développement d'infrastructures réseaux offrant une bande passante plus large afin de faciliter la fourniture de tels services en plus de la distribution télévisuelle traditionnelle (Broadcast).

Ces évolutions ont entrainé la création d'un nouveau type de services, appelé services OTT (Over-The-Top) ou services par contournement, assurant la livraison multi-écrans de contenus multimédias (vidéo et audio notamment) sur Internet. La participation d'un opérateur de réseau traditionnel dans le contrôle de la distribution du contenu est superflue pour que les services OTT fonctionnent. Ainsi, les services OTT sont fournis par l'intermédiaire de réseaux dits non managés, c'est-à-dire des réseaux dont la qualité de service (QoS) ou la bande passante varie pour chaque client et varie dans le temps.

La fourniture de services OTT fonctionne en point à point, chaque client disposant de sa propre connexion pour télécharger les contenus multimédias. Aussi, lorsque le nombre de clients augmente, la bande passante consommée augmente également ce qui entraine une surcharge des équipements amonts des fournisseurs de services OTT et aussi une surcharge des réseaux avals de distribution jusqu'à l'utilisateur final.

Cette surcharge est notamment accentuée par la multiplicité des formats de distribution des contenus multimédias qui obligent les fournisseurs de services OTT à conserver et gérer un même contenu sous différents formats.

La multiplicité des formats, aussi appelé profils, est due à l'hétérogénéité des conditions possibles de diffusion d'un contenu multimédia. Ainsi, les contraintes matérielles, la bande passante disponible, l'état de la connexion pour télécharger et diffuser les contenus multimédias sont autant de paramètres variables d'un client à un autre expliquant la nécessité d'une multiplicité des profils disponibles pour un même contenu multimédia.

En amont de la sélection des différents formats, ou profils, qui seront proposés aux utilisateurs lors de la diffusion d'un contenu multimédia, il est souvent nécessaire de procéder à une analyse de la complexité du contenu multimédia en question. Cette analyse permet de déterminer toute une gamme de formats potentiels.

Dans l'art antérieur, cette analyse de la complexité consiste à encoder le contenu multimédia selon différents formats, puis à le décoder pour analyser la qualité vidéo obtenue en regard des différents formats testés. Une telle analyse est particulièrement coûteuse en ressources puisqu'elle nécessite un grand nombre d'encodages du même contenu multimédia pour évaluer différents formats. Par ailleurs, une telle analyse de la complexité n'est pas adaptée à la diffusion en direct.

WO2014133745 divulgue des méthodes et des systèmes pour transmettre plusieurs flux vidéo à des clients en se basant sur les préférences individuelles des clients et sur les conditions du réseaux. Un problème de minimisation d'une fonction de coût, incorporant une prédiction de la qualité, est formulé afin de trouver des résolutions et débits optimaux en fonction de paramètres réseaux et du contenu. à

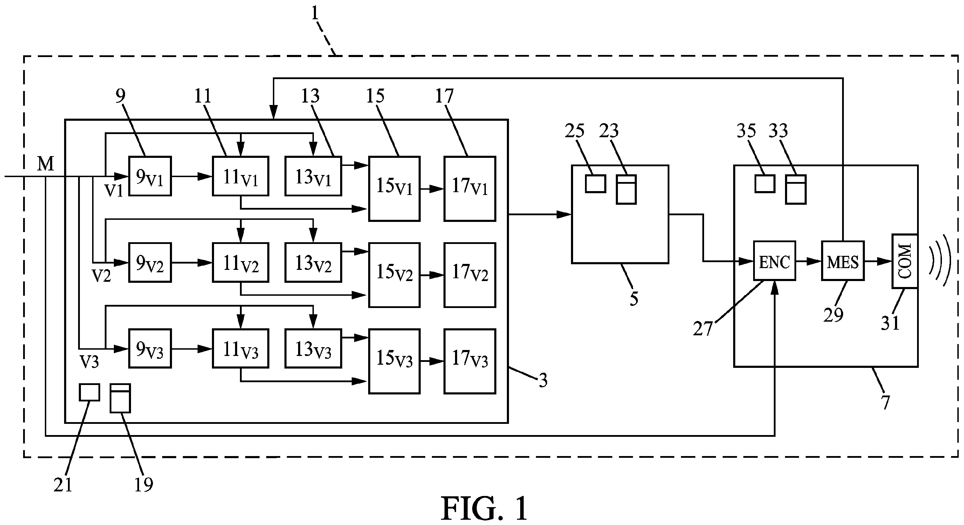

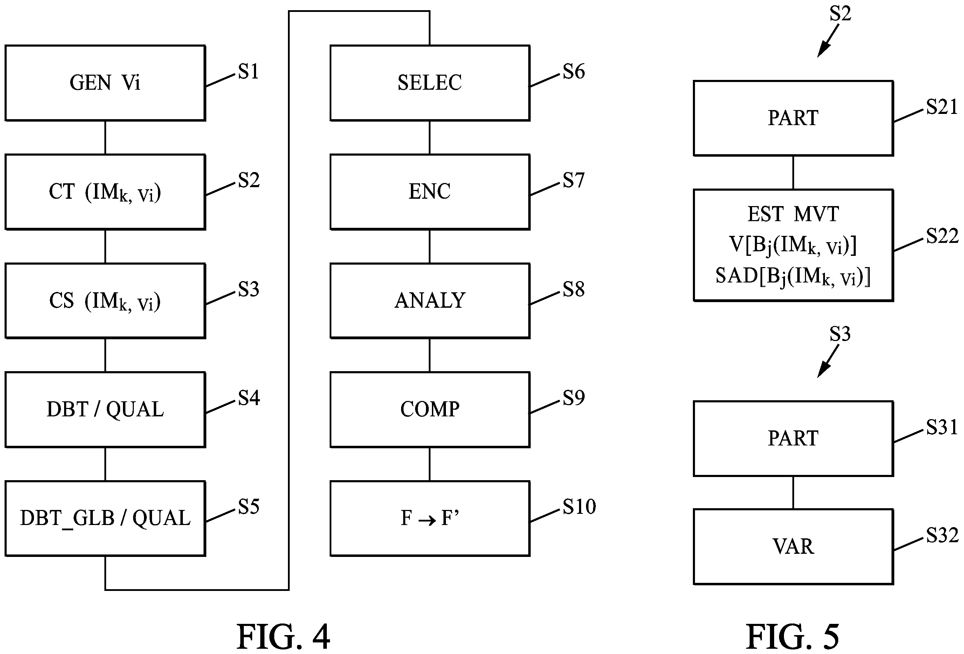

La présente invention vient améliorer la situation. L'invention est définie par les revendications. Une divulgation suffisante de l'invention telle que définie dans les revendications se trouve dans les figures 1 et 4 ainsi que dans les passages correspondants de la description. Dans la suite, les expressions "mode de réalisation" et "aspect de l'invention" doivent être comprises comme désignant des exemples permettant d'illustrer l'invention, à moins qu'elles ne se réfèrent précisément à l'invention telle que définie dans les revendications.

L'invention dont il est question ici concerne un procédé mis en oeuvre par des moyens informatiques en vue d'encoder numériquement un contenu multimédia source en un ou plusieurs flux vidéo pour une diffusion à la demande à au moins un terminal de réception. Le procédé comprend les étapes suivantes:

- générer un ensemble de versions du contenu multimédia, chaque version étant caractérisée par une résolution et comprenant une succession d'images,
- déterminer, pour chaque image de la succession d'images de chaque version, au moins une caractéristique temporelle et au moins une caractéristique spatiale,
- calculer, pour chaque image de la succession d'images de chaque version, une gamme de valeurs de débit vidéo, chaque valeur de débit vidéo étant calculée par application d'une fonction prédéterminée à l'au moins une caractéristique temporelle de l'image, l'au moins une caractéristique spatiale de l'image et une valeur d'une gamme donnée de valeurs théoriques relatives à une qualité d'encodage visée de manière à obtenir, pour chaque image, un ensemble de couples de valeurs débit vidéo-qualité théorique,
- calculer, pour chaque version et pour chaque valeur de la gamme donnée de valeurs théoriques de qualité d'encodage, un débit vidéo global fonction des débits vidéo associés à la valeur théorique de qualité d'encodage pour chaque image de la succession d'images de la version de manière à obtenir, pour chaque version, un ensemble de couples de valeurs débit vidéo global-qualité théorique,

- sélectionner au moins un groupe de profils d'encodage en fonction de l'ensemble de couples de valeurs débit vidéo global-qualité théorique de chaque version, chaque profil d'encodage étant caractérisé par une résolution et un débit vidéo global,
- encoder le contenu multimédia en un ou plusieurs flux vidéo, chaque flux vidéo étant obtenu par encodage dudit contenu multimédia selon un profil de l'au moins un groupe de profil sélectionné,
- analyser chaque flux vidéo obtenu pour déterminer la valeur de qualité d'encodage du profil d'encodage dudit flux vidéo,
- comparer, pour chaque flux vidéo analysé, la valeur de qualité d'encodage effectivement obtenue avec la valeur théorique de qualité d'encodage visée du profil d'encodage correspondant, et
- sur la base de la comparaison effectuée, modifier la fonction prédéterminée en vue d'améliorer ultérieurement la fiabilité du calcul de la gamme de valeurs de débit vidéo et l'obtention de l'ensemble de couples de valeurs débit vidéo-qualité théorique d'une image.

Comme précisé précédemment, chaque version du contenu multimédia source est caractérisée par une résolution. Le procédé visé permet, pour chacune de ces versions, de déterminer un ensemble de couples de valeurs débit vidéo global-qualité théorique. Cet ensemble de couples est typiquement représenté sous la forme d'une courbe débit vidéo global-qualité théorique. Par ailleurs, un profil d'encodage est caractérisé par une résolution et un débit vidéo. On comprend donc que le procédé visé permet de déterminer le profil d'encodage satisfaisant la qualité visée sans avoir à mettre en oeuvre un encodage effectif du contenu multimédia source selon le profil d'encodage en question.

La fonction prédéterminée utilisée permet donc de ne pas avoir à encoder le contenu multimédia source selon un profil donné pour estimer la qualité de ce profil ce qui représente donc un gain de temps ainsi qu'une complexité réduite et l'économie des ressources nécessaires à l'encodage. A noter également que l'encodage du contenu multimédia source et l'analyse du flux vidéo obtenu permettent de déterminer la qualité d'un profil mais ne permet pas de connaitre, à l'inverse, le profil permettant d'obtenir une qualité souhaitée. Dans le procédé visé, non seulement l'encodage n'est pas nécessaire mais en plus la qualité est une variable d'entrée de la fonction prédéterminée et non de sortie, d'où la possibilité de déterminer le profil permettant d'obtenir la qualité souhaitée. Un tel procédé est adapté à une diffusion en direct.

Selon un aspect de l'invention, chaque image comprend une matrice de pixels, la détermination d'au moins une caractéristique temporelle d'une image de la succession d'images d'une version comprenant :

- partitionner l'image en un ensemble de blocs de pixels, et
- réaliser une estimation de mouvement sur chaque bloc de pixels de sorte que chaque bloc de pixels est caractérisé, après l'estimation de mouvement, par un vecteur de mouvement et par une mesure de la qualité de l'estimation de mouvement.

L'au moins une caractéristique temporelle de l'image comprenant les vecteurs de mouvement respectifs des blocs de pixels de l'image et les mesures de qualité associées.

Par exemple, la mise en oeuvre de l'estimation de mouvement pour une image comprend un algorithme de type *block matching.*

La fonction prédéterminée dépend non seulement de la résolution et de la qualité visée mais aussi des caractéristiques propres aux images de la succession d'images. Ainsi, la détermination des caractéristiques temporelles de chaque image de la succession d'images permet une analyse adaptée spécifiquement aux images traitées et donc d'améliorer la fiabilité des résultats obtenus, à savoir le profil (plus exactement le débit vidéo caractérisant le profil) permettant d'obtenir une qualité d'encodage visée.

Par exemple, dans un mode de réalisation, la qualité de l'estimation de mouvement comprend une somme des différences absolues.

Selon un autre aspect de l'invention, chaque image comprend une matrice de pixels, la détermination d'au moins une caractéristique spatiale d'une image de la succession d'images d'une version comprenant :

- partitionner l'image en un ensemble de blocs de pixels, et
- mesurer la variance de chaque bloc de pixels de l'image.

L'au moins une caractéristique spatiale de l'image comprenant les variances respectives des blocs de pixels de l'image.

De même que pour les caractéristiques temporelles, les caractéristiques spatiales permettent elles-aussi une analyse ciblée et propre aux images de la succession d'images de chaque version.

Selon un autre aspect de l'invention, la fonction prédéterminée est déterminée par la mise en oeuvre d'un algorithme d'apprentissage sur la base d'un ensemble de données d'entrainement relatives à l'encodage d'une pluralité de contenus multimédias d'entrainement selon différents profils d'encodage d'entrainement, chaque profil d'encodage d'entrainement étant caractérisé par une résolution et un débit vidéo global, et à la mesure d'une valeur relative à la qualité de l'encodage suite à chaque encodage.

Comme expliqué précédemment, la fonction prédéterminée permet de ne pas avoir à encoder le contenu multimédia source selon chacun des profils. Le fait de prendre en entrée la qualité visée pour déterminer le débit vidéo correspondant en complément de la résolution permet de déterminer des profils dont la qualité estimée est celle visée ou attendue. La fonction prédéterminée est d'autant plus efficace qu'elle est déterminée par apprentissage. Autrement dit, cette fonction est déterminée en encodant typiquement un grand nombre de contenus multimédias, différant les uns des autres de par les caractéristiques temporelles et spatiales des images, selon différents profils et en mesurant pour chaque profil testé la qualité obtenue. La mise en commun de ces résultats permet la construction d'une fonction établissant une relation entre la résolution, la qualité, les caractéristiques temporelles, les caractéristiques spatiales et le débit vidéo. Ainsi, une telle fonction a une fonction « réciproque » au sens où, pour une valeur de qualité ciblée et pour une image dont les caractéristiques ont été déterminées, elle permet de calculer le débit vidéo de sorte à obtenir un profil, caractérisé par la résolution et le débit vidéo calculé, dont la qualité est *a priori* celle visée.

Par exemple, dans un mode de réalisation, l'algorithme d'apprentissage utilise un modèle de réseau de neurones. En variante, l'algorithme d'apprentissage comprend une méthode des moindres carrés.

Selon un autre aspect de l'invention, le débit vidéo global associé à une version et à une valeur de la gamme donnée de valeurs théoriques de qualité d'encodage est une moyenne des débits vidéo associés à la valeur théorique de qualité d'encodage pour chaque image de la succession d'images de la version.

Comme expliqué précédemment, les caractéristiques spatiales et temporelles sont déterminées pour chaque image de sorte que, pour une valeur de qualité donnée issue de la gamme, le débit vidéo calculé est propre à une image et non à la succession d'images au sein de laquelle se trouve l'image. Il est donc nécessaire d'avoir, pour chaque valeur de qualité, un débit vidéo global pour la succession d'images et donc pour la version, le débit vidéo global étant bien entendu déterminé sur la base des débits vidéo des images.

Comme expliqué précédemment, la fonction prédéterminée permet de déterminer des profils d'encodage sans avoir à encoder effectivement le contenu multimédia source. Néanmoins, la finalité étant la diffusion de flux vidéo obtenus par encodage du contenu multimédia source selon différents profils, l'encodage sera nécessairement mis en oeuvre en aval du procédé. On comprend donc qu'il peut être pertinent de mesurer la qualité effectivement obtenue pour un flux vidéo correspondant à un profil d'encodage pour comparer cette valeur à la valeur-cible, utilisée en entrée de la fonction prédéterminée pour calculer le débit vidéo global nécessaire à la définition du profil en complément d'une valeur de résolution. Cette comparaison permet ainsi de modifier la fonction prédéterminée pour en améliorer l'efficacité.

Dans un mode de réalisation, la fonction prédéterminée est modifiée sur la base de la comparaison effectuée si la différence entre la valeur de qualité d'encodage obtenue pour un flux vidéo et la valeur théorique de qualité d'encodage visée du profil correspondant au flux vidéo est supérieure ou égale à un seuil prédéterminé.

Il est possible de constater une différence entre la qualité obtenue et la qualité visée sans pour autant que cette différence soit de nature à remettre en cause les performances de la fonction prédéterminée. Il est donc intéressant de fixer un seuil en dessous duquel il n'est pas nécessaire de modifier la fonction prédéterminée quand bien même un écart serait constaté entre la qualité visée et la qualité obtenue. Bien entendu, dans un mode de réalisation, la fonction prédéterminée est modifiée sur la base de la comparaison effectuée quels que soit les résultats de cette comparaison. On comprend donc que, dans ce mode de réalisation, le seuil prédéterminé est de valeur nulle, ce qui est équivalent à considérer qu'il n'y a pas de seuil prédéterminé.

Selon un autre aspect de l'invention, la fonction prédéterminée est déterminée par la mise en oeuvre d'un algorithme d'apprentissage sur la base d'un ensemble de données d'entrainement relatives à l'encodage d'une pluralité de contenus multimédias d'entrainement selon différents profils d'encodage d'entrainement et à la mesure d'une valeur relative à la qualité de l'encodage suite à chaque encodage, la modification de la fonction prédéterminée sur la base de la comparaison effectuée comprenant l'intégration d'un ensemble de nouvelles données relatives à l'encodage du contenu multimédia source et à l'analyse du ou des flux vidéo obtenus, les nouvelles données ayant un poids supérieur à celle des données d'entrainement.

La présente invention concerne en outre un programme informatique comprenant des instructions pour la mise en oeuvre du procédé selon l'une des revendications précédentes, lorsque les instructions sont exécutées par au moins un processeur.

Enfin, la présente invention concerne également un système comprenant un module d'analyse, en vue d'encoder numériquement un contenu multimédia source en un ou plusieurs flux vidéo pour une diffusion à la demande à au moins un terminal de réception. Le module d'analyse est agencé pour :

- générer un ensemble de versions du contenu multimédia, chaque version étant caractérisée par une résolution et comprenant une succession d'images,
- déterminer, pour chaque image de la succession d'images de chaque version, au moins une caractéristique temporelle et au moins une caractéristique spatiale,
- calculer, pour chaque image de la succession d'images de chaque version, une gamme de valeurs de débit vidéo, chaque valeur de débit vidéo étant calculée par application d'une fonction prédéterminée à l'au moins une caractéristique temporelle de l'image, l'au moins une caractéristique spatiale de l'image et une valeur d'une gamme donnée de valeurs théoriques relatives à une qualité d'encodage visée de manière à obtenir, pour chaque image, un ensemble de couples de valeurs débit vidéo-qualité théorique,

- calculer, pour chaque version et pour chaque valeur de la gamme donnée de valeurs théoriques de qualité d'encodage, un débit vidéo global fonction des débits vidéo associés à la valeur théorique de qualité d'encodage pour chaque image de la succession d'images de la version de manière à obtenir, pour chaque version, un ensemble de couples de valeurs débit vidéo global-qualité théorique,

- un module de sélection agencé pour recevoir l'ensemble de couples de valeurs débit vidéo global-qualité théorique associé à chaque version, le module de sélection étant agencé en outre pour sélectionner au moins un groupe de profils d'encodage du contenu multimédia, chaque profil d'encodage étant caractérisé par une résolution et un débit vidéo global, et

- un module d'encodage agencé pour encoder le contenu multimédia en un ou plusieurs flux vidéo, chaque flux vidéo étant obtenu par encodage dudit contenu multimédia selon un profil d'encodage de l'au moins un groupe de profils d'encodage sélectionné par le module de sélection.

Le module d'encodage est agencé en outre pour :

- analyser chaque flux vidéo obtenu pour déterminer la valeur de qualité d'encodage du profil d'encodage dudit flux vidéo,

- comparer, pour chaque flux vidéo analysé, la valeur de qualité d'encodage effectivement obtenue avec la valeur théorique de qualité d'encodage visée du profil d'encodage correspondant, et

- transmettre les résultats de la comparaison au module d'analyse.

Par ailleurs, le module d'analyse est agencé en outre pour, sur la base de la comparaison effectuée, modifier la fonction prédéterminée en vue d'améliorer ultérieurement la fiabilité du calcul de la gamme de valeurs de débit vidéo et l'obtention de l'ensemble de couples de valeurs débit vidéo-qualité théorique d'une image.

D'autres caractéristiques, détails et avantages de l'invention apparaîtront à la lecture de la description détaillée ci-après, et à l'analyse des dessins annexés, sur lesquels :

• la **Figure 1** illustre un système selon l'invention, comprenant un module d'analyse, un module de sélection d'au moins un groupe de profils et un module d'encodage ;

• La **Figure 2** illustre une estimation de mouvement mise en oeuvre au sein du module d'analyse selon un mode de réalisation ;

• la **Figure 3** illustre une courbe débit vidéo global-qualité théorique obtenue par le module d'analyse pour une version d'un contenu multimédia source caractérisée par une résolution de 1920x1080 à partir de plusieurs courbes débit-distorsion relatives à plusieurs images de la version ;

• la **Figure 4** illustre un procédé selon l'invention ; et

• la **Figure 5** illustre une étape de détermination d'au moins une caractéristique temporelle d'une image et une étape de détermination d'au moins une caractéristique spatiale d'une image du procédé de la **Figure 4**.

La **Figure 1** illustre un système 1. Le système 1 est agencé pour encoder numériquement un contenu multimédia source M en un ou plusieurs flux vidéo en vue d'une diffusion à la demande, notamment en direct, à au moins un terminal de réception.

Par « encoder numériquement », on entend ici qu'un flux vidéo obtenu est un flux compressé selon un standard donné de compression. Ces standards de compression désignent des normes existantes connues de l'homme du métier. A titre d'exemple uniquement, ces normes sont des normes telles que H.265, aussi appelée MPEG- HEVC (acronyme anglophone pour « *High Efficiency Video Coding* »), H.264 aussi appelée MPEG-4 AVC (acronyme anglophone pour *« Advanced Video Coding »*). Bien entendu, d'autres standards de compression sont possibles. Pour chaque standard de compression, on peut définir plusieurs profils d'encodage, ou profils de compression. Dans la suite de la description on utilisera plus simplement le terme *profil.* Chaque profil est caractérisé par au moins une valeur de paramètre d'encodage. Par exemple, un profil est caractérisé par deux valeurs de paramètre d'encodage : une résolution et un débit vidéo. On comprend donc que dans le contexte de l'invention, un profil désigne un type d'encodage et non le flux vidéo résultant de l'encodage du contenu multimédia source selon le profil en question.

Il apparaît donc que le système 1 est agencé pour encoder numériquement le contenu multimédia source M selon différents profils, chaque profil correspondant à un standard de compression caractérisé, par exemple, par une résolution et un débit vidéo. La diversité des profils proposés permet une distribution OTT (Over-The-Top) à différents terminaux de réception, sachant que les conditions de téléchargement et de diffusion du contenu multimédia source M sont variables d'un terminal de réception à un autre, d'où la nécessité de proposer plusieurs formats du même contenu multimédia, chaque format correspondant à un flux vidéo compressé selon un profil spécifique.

Le système 1 comprend un module d'analyse 3, un module de sélection 5 et un module d'encodage 7.

Le module d'analyse 3 est agencé pour recevoir le contenu multimédia source M et pour générer un ensemble de profils d'encodage du contenu multimédia source M. Comme expliqué précédemment, un profil est typiquement caractérisé par une résolution et un débit vidéo. D'autre part, il est possible d'associer une qualité vidéo au couple de valeurs formé par la résolution et le débit vidéo. Autrement dit, il est possible d'associer une qualité vidéo à un profil. Par exemple, la qualité vidéo peut comprendre la « distorsion ».

La distorsion permet de caractériser la qualité de reconstruction d'une image compressée, ici une image du flux vidéo après encodage puis décodage, par rapport à une image originale, ici l'image correspondante du contenu multimédia source M.

La métrique de mesure de la distorsion est par exemple le PSNR (acronyme anglophone pour *« Peak Signal to Noise Ration »*). Le PSNR peut être défini comme suit :

$$PSNR = 10 \cdot log_{10}(\frac{d^2}{EQM})$$

où :

- $d$ est une dynamique du flux vidéo après encodage puis décodage, c'est-à-dire la valeur maximum possible pour un pixel d'une image du flux vidéo en question, et

- $EQM$ est l'erreur quadratique moyenne définie comme suit pour une image originale $I_o$ du contenu multimédia source M et une image compressée $I_c$ du flux vidéo, chaque image étant une matrice de m*n pixels :

$$EQM = \frac{1}{mn} \sum_{i=0}^{m-1} \sum_{j=0}^{n-1} (I_o(i,j) - I_c(i,j))^2$$

où :

- $I_o(i, j)$ est la valeur du pixel de la i-ème ligne et de la j-ème colonne de l'image originale $I_o$ ; et
- $I_c(i, j)$ est la valeur du pixel de la i-ème ligne et de la j-ème colonne de l'image compressée $I_c$.

Par ailleurs, il est bien connu de l'homme du métier que, pour le calcul du PSNR, il est classique d'ajouter une valeur réelle strictement positive ε à l'erreur quadratique moyenne. L'ajout d'une telle valeur permet par exemple de pouvoir calculer une valeur de PSNR même lorsque l'erreur quadratique moyenne est nulle.

Le PSNR peut s'exprimer sans unité ou en décibels (dB).

La distorsion n'est qu'un exemple et d'autres définitions de la qualité vidéo d'un profil sont possibles.

On comprend donc ici que, en sortie du module d'analyse 3, on dispose d'un ensemble de profils d'encodage du contenu multimédia source M, chaque profil étant caractérisé par une résolution et un débit vidéo de sorte qu'une qualité théorique ou qualité visée est associée à chaque profil.

Comme illustré en **Figure 1,** le module d'analyse 3 comprend au moins une mémoire 9, ici trois mémoires $9_{V1}$, $9_{V2}$, $9_{V3}$, au moins un module de détermination de caractéristique temporelle 11, ici trois modules de détermination de caractéristique temporelle $11_{V1}$, $11_{V2}$, $11_{V3}$, au moins un module de détermination de caractéristique spatiale 13, ici trois modules de détermination de caractéristique spatiale $13_{V1}$, $13_{V2}$, $13_{V3}$, au moins un module de calcul 15, ici trois modules de calcul $15_{V1}$, $15_{V2}$, $15_{V3}$, et au moins un module d'accumulation 17, ici trois modules d'accumulation $17_{V1}$, $17_{V2}$, $17_{V3}$. Le module d'analyse 3 comprend en outre une mémoire 19 et un processeur 21.

Comme expliqué précédemment, le module d'analyse 3 est agencé pour recevoir en entrée le contenu multimédia source M. Le module d'analyse 3 est également agencé pour générer un ensemble de versions de ce contenu multimédia M, chaque version étant caractérisée par une résolution et comprenant une succession d'images. Dans la description, on utilise le terme *résolution,* néanmoins on peut parler plus généralement de résolution spatio-temporelle. Par exemple, chaque version est générée par sous-échantillonnage du contenu multimédia source M à une résolution donnée. On comprend ici qu'une version comprend des images du contenu multimédia source M à une résolution donnée. Par exemple, la succession d'images d'une version comprend toutes les images du contenu multimédia source M. Alternativement, la succession d'images d'une version comprend une partie seulement des images du contenu multimédia source M. La succession d'images d'une version peut donc ne pas comprendre toutes les images du contenu multimédia source M. Dans l'exemple décrit ici, trois versions V1, V2 et V3 du contenu multimédia source M ont été générées. On comprend donc que chacune de ces versions est caractérisée par une résolution qui lui est propre.

La mémoire 9 est agencée pour stocker les images de la succession d'images d'une version du contenu multimédia source M. Comme expliqué précédemment, il n'est pas nécessaire d'utiliser toutes les images du contenu multimédia source M pour générer les différentes versions qui seront stockées. On comprend donc qu'il n'est pas nécessaire de stocker toutes les images du contenu multimédia source M. Par ailleurs, dans un mode de réalisation, les versions du contenu multimédia source M sont générées progressivement. La mémoire 9 est alors agencée, à la manière d'une fenêtre glissante, pour stocker au fur et à mesure les images d'une version générées progressivement. Comme expliqué par la suite, ces images sont extraites de la mémoire 9 au fur et à mesure pour être traitées, les premières images d'une version pouvant donc commencer à être traitées avant même que les dernières images de cette même version aient été générées et stockées dans la mémoire 9. Dans l'exemple illustré en **Figure 1,** il y a donc une mémoire 9 pour chaque version du contenu multimédia source M générée. En l'occurrence, la mémoire $9_{V1}$ est agencée pour stocker les images de la succession d'images de la version V1, la mémoire $9_{V2}$ est agencée pour stocker les images de la succession d'images de la version V2 et la mémoire $9_{V3}$ est agencée pour stocker les images de la succession d'images de la version V3.

Bien entendu, l'homme du métier comprend que les trois mémoires $9_{V1}$, $9_{V2}$, $9_{V3}$ peuvent être trois mémoires distinctes ou bien une seule et même mémoire.

Avantageusement, la mémoire 9 est une mémoire de type *FIFO* (First-In-First-Out). Autrement dit, la première image stockée dans la mémoire 9 est également la première image extraite de la mémoire 9 pour le traitement expliquée dans la suite de la description. Comme expliqué précédemment, les images des versions sont typiquement générées en temps réel, au fur et à mesure, de sorte que les images stockées progressivement dans la mémoire 9 de type FIFO sont extraites puis traitées dans l'ordre dans lequel elles ont été générées.

Le module de détermination de caractéristique temporelle 11, ci-après module 11, est agencé pour déterminer, pour chaque image de la succession d'images d'une version du contenu multimédia source M, au moins une caractéristique temporelle. Dans le cas décrit ici, le module $11_{V1}$ est agencé pour déterminer au moins une caractéristique temporelle pour chaque image de la succession d'images de la version V1, le module $11_{V2}$ est agencé pour déterminer au moins une caractéristique temporelle pour chaque image de la succession d'images de la version V2, le module $11_{V3}$ est agencé pour déterminer au moins une caractéristique temporelle pour chaque image de la succession d'images de la version V3.

Bien entendu, l'homme du métier comprend que les trois modules $11_{V1}$, $11_{V2}$, $11_{V3}$ peuvent être trois modules distincts ou bien un seul et même module.

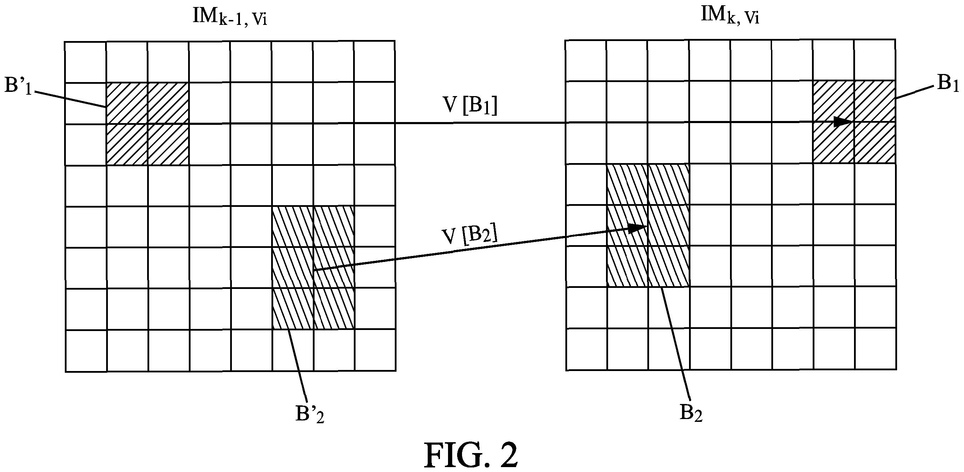

La **Figure 2** illustre un mode de réalisation de la détermination d'au moins une caractéristique temporelle d'une image mise en oeuvre par le module 11.

Dans le cas décrit ici, le module 11 détermine au moins une caractéristique temporelle de la k-ième image de la succession d'images d'une version Vi du contenu multimédia source M. La version Vi est par exemple la version V1, V2 ou V3. L'image en question est donc notée par la suite $IM_{k,vi}$.

Dans ce mode de réalisation, le module 11 est agencé pour partitionner une image de la succession d'images d'une version du contenu multimédia source M en un ensemble de blocs de pixels. Sur la **Figure 2,** l'image partitionnée est l'image $IM_{k,vi}$ et on a donc représenté un premier bloc $B_1$ et un deuxième bloc $B_2$ de l'image $IM_{k,vi}$. Le bloc $B_1$ de l'image $IM_{k,vi}$ est un bloc de pixels 2x2 tandis que le bloc $B_2$ de l'image $IM_{k,vi}$ est un bloc de pixels 3x2.

Toujours dans ce mode de réalisation, le module 11 est agencé en outre pour comparer l'image $IM_{k,vi}$ avec l'image précédente, c'est-à-dire l'image $IM_{k-1,vi}$, de la même version, pour réaliser une estimation de mouvement sur chaque bloc de pixels. Chaque bloc de pixels est caractérisé, après l'estimation de mouvement, par un vecteur de mouvement. Par exemple, le bloc $B_1$ est comparé à tous les blocs 2x2 de l'image précédente $IM_{k-1,vi}$ pour déterminer le bloc $B_1$' le plus susceptible de lui correspondre. De même, le bloc $B_2$ est comparé à tous les blocs 3x2 de l'image précédente $IM_{k-1,vi}$ pour déterminer le bloc $B_2$' le plus susceptible de lui correspondre.

Après l'estimation de mouvement mise en oeuvre par le module 11, le bloc $B_1$ est donc caractérisé par un vecteur de mouvement noté **$V[B_1]$**. De même, le bloc $B_2$ est caractérisé par un vecteur de mouvement noté **$V[B_2]$**. Le vecteur de mouvement est relatif au « mouvement » d'un bloc de l'image précédente $IM_{k-1,Vi}$ à l'image considérée $IM_{k,vi}$ de la version Vi.

Différentes méthodes sont connues de l'homme du métier pour réaliser une estimation de mouvement. Par exemple, l'estimation de mouvement réalisée par le module 11 peut comprendre un algorithme de type *block-matching.*

Par ailleurs, chaque bloc de pixels est caractérisé en outre, après l'estimation de mouvement, par une mesure de la qualité de l'estimation de mouvement. Par exemple, la qualité de l'estimation de mouvement comprend une somme des différences absolues (connue également sous l'acronyme anglophone SAD pour *« Sum of Absolute Différences »*). La somme des différences absolues associée à un bloc de pixels $B_j$ de l'image $IM_{k,vi}$ peut être calculée comme suit :

$$SAD(B_j) = \sum_{b=1}^{m}\sum_{a=1}^{n}\left|B_j(a,b) - B_j'(a,b)\right|$$

où :

- SAD($B_j$) est la somme des différences absolues associées au bloc $B_j$ de l'image $IM_{k,vi}$ ;
- m et n sont respectivement le nombre de lignes et le nombre de colonnes du bloc $B_j$ ;
- $B_j(a,b)$ est la valeur du pixel situé sur la a-ième ligne et la b-ième colonne du bloc $B_j$ ;
- $B_j'$ est le bloc de l'image précédente $IM_{k-1,vi}$ de la même version Vi correspondant au bloc $B_j$ ; et
- $B_j'(a,b)$ est la valeur du pixel situé sur la a-ième ligne et la b-ième colonne du bloc $B_j'$.

Dans ce mode de réalisation, les caractéristiques temporelles de l'image $IM_{k,vi}$ comprennent les vecteurs de mouvement respectifs des blocs de pixels de l'image et les mesures de qualité associées, en l'occurrence ici la somme des différences absolues.

Bien entendu, d'autres mesures de qualité sont envisageables lors de la détermination des caractéristiques temporelles de chaque image. Par exemple, en complément ou à la place de la somme des différences absolues, d'autres métriques de mesures de qualité de l'estimation de mouvement sont possibles comme l'erreur quadratique moyenne ou la variance.

En sortie du module 11, chaque image de la succession d'images de chaque version du contenu multimédia source M est donc caractérisée par au moins une caractéristique temporelle.

Le module de détermination de caractéristique spatiale 13, ci-après module 13, est agencé pour déterminer, pour chaque image de la succession d'images d'une version du contenu multimédia source M, au moins une caractéristique spatiale. Dans le cas décrit ici, le module $13_{V1}$ est agencé pour déterminer au moins une caractéristique spatiale pour chaque image de la succession d'images de la version V1, le module $13_{V2}$ est agencé pour déterminer au moins une caractéristique spatiale pour chaque image de la succession d'images de la version V2, le module $13_{V3}$ est agencé pour déterminer au moins une caractéristique spatiale pour chaque image de la succession d'images de la version V3.

Bien entendu, l'homme du métier comprend que les trois modules $13_{V1}$, $13_{V2}$, $13_{V3}$ peuvent être trois modules distincts ou bien un seul et même module.

Dans un ou plusieurs modes de réalisation, le module 13 est agencé pour partitionner une image de la succession d'images d'une version du contenu multimédia source M en un ensemble de blocs de pixels. Ce partitionnement peut être le même que celui mis en oeuvre par le module 11.

Toujours dans ce mode de réalisation, le module 13 est agencé en outre pour mesurer la variance de chaque bloc de pixels de l'image en question. La variance d'un bloc de pixels $B_j$ de l'image $IM_{k,vi}$ peut être calculée comme suit :

$$\sigma(B_j)^2 = \frac{1}{mn} \sum_{b=1}^{m} \sum_{a=1}^{n} (B_j(a,b) - \mu_j)^2$$

où :

- $a(B_j)^2$ est la variance associée au bloc $B_j$ de l'image $IM_{k,vi}$ ;
- m et n sont respectivement le nombre de lignes et le nombre de colonnes du bloc $B_j$ ;
- $B_j(a,b)$ est la valeur du pixel situé sur la a-ième ligne et la b-ième colonne du bloc $B_j$ ;
- $\mu_j$ est la moyenne des valeurs respectives des pixels du bloc $B_j$.

Les caractéristiques spatiales d'une image comprennent alors les variances respectives des blocs de pixels de l'image.

De même qu'il est possible d'utiliser d'autres caractéristiques temporelles que celles déterminées à l'issue de l'estimation de mouvement, il apparaît évident à l'homme du métier que d'autres caractéristiques spatiales peuvent être exploitées en complément ou à la place de la variance par bloc. A titre d'exemples uniquement, le module 13 peut également mettre en oeuvre des histogrammes, de la détection de contour ou encore des histogrammes de gradient. Par ailleurs, cette détermination de caractéristique spatiale par le module 13 sur une image donnée peut être mise en oeuvre par blocs de l'image ou de manière globale sur toute l'image.

Le module de calcul 15, ci-après module 15, est agencé pour déterminer, pour chaque image de la succession d'images d'une version du contenu multimédia source M, une courbe débit vidéo-qualité théorique. Le module de calcul 15 peut également être appelé module d'estimation de coût de codage ou encore module de modélisation débit-qualité. Dans le cas décrit ici, le module $15_{V1}$ est agencé pour déterminer une courbe débit vidéo-qualité théorique pour chaque image de la succession d'images de la version V1, le module $13_{V2}$ est agencé pour déterminer une courbe débit vidéo-qualité théorique pour chaque image de la succession d'images de la version V2, le module $13_{V3}$ est agencé pour déterminer une courbe débit vidéo-qualité théorique pour chaque image de la succession d'images de la version V3.

Bien entendu, l'homme du métier comprend que les trois modules $15_{V1}$, $15_{V2}$, $15_{V3}$ peuvent être trois modules distincts ou bien un seul et même module.

Plus particulièrement, le module 15 est agencé pour calculer, pour chaque image, une gamme de valeurs de débit vidéo. Chaque valeur de débit vidéo est calculée par application d'une fonction prédéterminée F à l'au moins une caractéristique temporelle de l'image, l'au moins une caractéristique spatiale de l'image et une valeur d'une gamme donnée de valeurs théoriques relatives à une qualité d'encodage visée.

En d'autres termes, le module 15 est agencé pour recevoir, pour chaque image de la succession d'images d'une version, les caractéristiques temporelles déterminées par le module 11 et les caractéristiques spatiales déterminées par le module 13. En notant CT l'ensemble des caractéristiques temporelles d'une image et CS l'ensemble des caractéristiques spatiales d'une image, on a la relation suivante :

$$D = F(Q, CT, CS)$$

où :

- D est une valeur de débit vidéo ;
- Q est une valeur théorique de qualité d'une gamme de valeurs théoriques relatives à une qualité d'encodage visée ; et
- F est une fonction prédéterminée.

On rappelle par ailleurs que chaque image a une résolution donnée puisque les différentes versions du contenu multimédia source M sont chacune caractérisées par une résolution.

Le module 15 est donc agencé pour déterminer un ensemble de couples débit vidéo-qualité théorique (D,Q) en appliquant la fonction prédéterminée F à chaque valeur théorique de qualité de la gamme de valeurs théoriques relatives à une qualité d'encodage visée, les caractéristiques spatiales et temporelles étant connues pour chaque image grâce aux modules 11 et 13 décrits précédemment.

La fonction F est une fonction prédéterminée. Dans un ou plusieurs modes de réalisation, la fonction prédéterminée F est déterminée par la mise en oeuvre d'un algorithme d'apprentissage sur la base d'un ensemble de données d'entrainement relatives à l'encodage d'une pluralité de contenus multimédias d'entrainement selon différents profils d'encodage d'entrainement, chaque profil d'encodage d'entrainement étant caractérisé par une résolution et un débit vidéo global, et à la mesure d'une valeur relative à la qualité de l'encodage suite à chaque encodage.

En d'autres termes, pour déterminer la fonction prédéterminée F et ainsi l'appliquer à différentes valeurs théoriques de qualité visée, on procède en amont à l'encodage de plusieurs contenus multimédias prédéterminés selon différents profils. Suite à l'encodage selon un profil donné, on mesure la qualité du flux vidéo obtenu. Bien entendu, la fonction prédéterminée F dépend également des caractéristiques spatiale et temporelle respectives des images du flux vidéo obtenu, on détermine donc également, pour chaque image du flux vidéo obtenu, au moins une caractéristique spatiale et au moins une caractéristique temporelle. On obtient alors, pour chaque image caractérisée par des caractéristiques spatiale et temporelle qui lui sont propres, une qualité associée au couple formé par un débit vidéo et une résolution, c'est-à-dire la qualité associée au profil correspondant. Il est alors possible de construire la fonction F par apprentissage sur la base des données d'entrainement, à savoir les données obtenues par encodage des contenus multimédias selon différents profils et de la mesure de qualité suite à chaque encodage.

Cette fonction prédéterminée F permet, comme expliqué précédemment, de déterminer, pour une image donnée de la succession d'images d'une version d'un contenu multimédia dont les caractéristiques spatiale et temporelle sont connues, la relation entre le profil d'encodage de cette version et la valeur relative à la qualité de l'encodage. Ainsi, lorsque la résolution et les caractéristiques spatiale et temporelle d'une image sont connues, comme dans la présente invention, on peut déterminer, pour chaque valeur relative à la qualité de l'encodage, le débit vidéo associé.

Plusieurs algorithmes d'apprentissage sont possibles pour déterminer la fonction F. Par exemple, l'algorithme d'apprentissage comprend une méthode des moindres carrés. Alternativement ou parallèlement, l'algorithme d'apprentissage utilise un modèle de réseau de neurones.

Plus généralement, l'homme du métier dispose des connaissances nécessaires pour déterminer, à partir des valeurs de différents paramètres un modèle traduisant la relation entre ces différents paramètres.

Le principe ici est donc d'encoder en amont plusieurs contenus multimédias selon différents profils. Les profils, à savoir la résolution et le débit vidéo, sont connus. On obtient ainsi plusieurs versions des différents contenus multimédias d'entrainement. On détermine ensuite, pour une ou plusieurs images (idéalement chaque image) de la succession d'images de chaque version obtenue la qualité obtenue ainsi que les caractéristiques spatiale et temporelle. Pour une image donnée, on dispose donc des caractéristiques du profil, à savoir la résolution et le débit vidéo, la qualité et les caractéristiques spatiale et temporelle. En utilisant des méthodes connues, on peut alors établir la relation entre ces différents paramètres. La fonction prédéterminée F telle que mentionnée dans la description se réfère à une telle relation pour une résolution donnée. En d'autres termes, pour chaque résolution, on dispose d'une fonction prédéterminée F traduisant, pour une image donnée d'une version obtenue par encodage d'un contenu multimédia selon cette résolution, la relation entre le débit vidéo, la qualité et les caractéristiques spatiale et temporelle de l'image.

Cette relation est établie au niveau de l'image et non de la version (à savoir la succession d'images) et dépend donc des caractéristiques spatiale et temporelle propres à l'image considérée.

En sortie du module 15, un ensemble de couples débit vidéo-qualité théorique est donc associé à chaque image de la succession d'images de chaque version, chaque version étant caractérisée par une résolution.

A titre d'exemple, pour une image donnée, ayant des caractéristiques temporelles CT et des caractéristiques spatiales CS, et pour une gamme de valeurs théoriques relative à une qualité d'encodage visée $\{Q_1, Q_2, Q_3, Q_4\}$, on calcule autant de valeurs de débit vidéo qu'il y a de valeurs de qualité, donc quatre valeurs de débit vidéo :

$$D_1 = F(Q_1, CT, CS)$$

$$D_2 = F(Q_2, CT, CS)$$

$$D_3 = F(Q_3, CT, CS)$$

$$D_4 = F(Q_4, CT, CS)$$

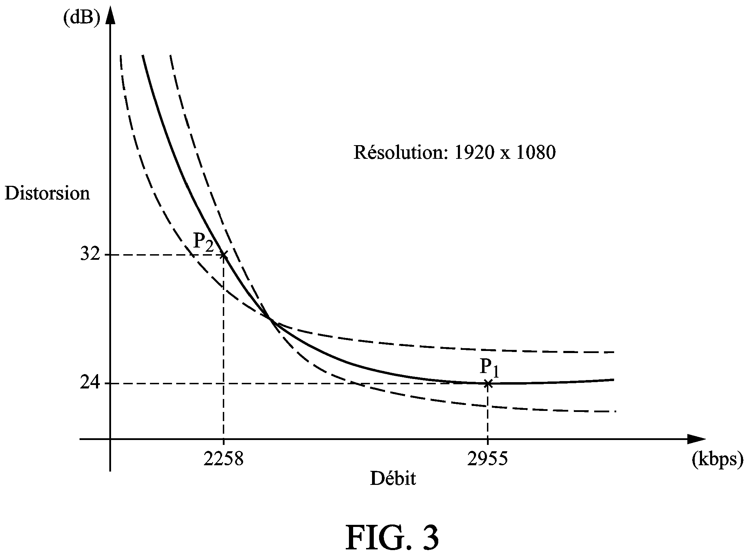

Avantageusement, et comme illustré en **Figure 3,** l'ensemble de couples débit vidéo-qualité théorique d'une image peut-être illustré sous la forme d'une courbe débit vidéo-qualité théorique. Par exemple, le module 15 est agencé pour réaliser une interpolation à partir des points débit vidéo-qualité théorique calculés.

Dans l'exemple illustré en **Figure 3,** la distorsion est utilisée pour caractériser la qualité. Sur cette figure, les courbes en trait discontinu représentent chacune la relation débit vidéo-qualité théorique respectivement de deux images d'une succession d'images d'une version caractérisée par une résolution 1920x1080. Dans le cas illustré ici, les courbes débit vidéo-qualité théorique de deux images seulement sont représentées.

On comprend qu'avantageusement, la succession d'images d'une version du contenu multimédia source M comprend un nombre beaucoup plus élevé d'images ce qui conduirait au tracé d'une courbe en trait discontinu pour chaque image. Le trait continu représenté sur cette figure sera explicité ci-après dans la description du module d'accumulation 17.

Le module d'accumulation 17, ci-après module 17, est agencé pour déterminer, pour chaque version, une courbe débit vidéo global-qualité théorique. La notion de *débit vidéo global* sera détaillée ci-après. Dans le cas décrit ici, le module $17_{V1}$ est agencé pour déterminer une courbe débit vidéo global-qualité théorique pour chaque image de la succession d'images de la version V1, le module $17_{V2}$ est agencé pour déterminer une courbe débit vidéo global-qualité théorique pour chaque image de la succession d'images de la version V2, le module $17_{V3}$ est agencé pour déterminer une courbe débit vidéo global-qualité théorique pour chaque image de la succession d'images de la version V3.

Bien entendu, l'homme du métier comprend que les trois modules $17_{V1}$, $17_{V2}$, $17_{V3}$ peuvent être trois modules distincts ou bien un seul et même module.

Comme expliqué précédemment, en sortie du module 15, chaque image de la succession d'images de chaque version est associée à un ensemble de couples débit vidéo-qualité théorique. Cet ensemble de couples débit vidéo-qualité théorique est parfois représenté sous la forme d'une courbe débit vidéo-qualité théorique. Néanmoins, il est nécessaire d'obtenir une relation entre le débit vidéo et la qualité pour la succession d'images dans sa totalité et non uniquement pour chaque image.

Le module 17 est donc agencé pour calculer, pour chaque version et pour chaque valeur de la gamme donnée de valeurs théoriques de qualité d'encodage, un débit vidéo global fonction des débits vidéo associés à la valeur théorique de qualité d'encodage pour chaque image de la succession d'images de la version de manière à obtenir, pour chaque version, un ensemble de couples de valeurs débit vidéo global-qualité théorique.

En effet, la gamme de valeurs théoriques de qualité d'encodage visée pour laquelle des valeurs de débit vidéo sont calculées est la même pour chaque image d'une succession d'images d'une version donnée. Il est donc possible de déterminer, pour une valeur théorique de qualité donnée, le débit vidéo global en fonction des débits vidéo associés à cette valeur de qualité respectivement pour chacune des images de succession d'images. Par exemple, le débit vidéo global est la moyenne des débits vidéo.

On considère à titre d'exemple une version Vi du contenu multimédia source M comprenant une succession de N images. Ces images sont notées comme suit :

$$\{IM_{k,Vi} \; avec \; k \in [\![1; N]\!]\}$$

Pour une k-ième image donnée de cette succession d'images, les caractéristiques temporelles et spatiales associées déterminées respectivement par les modules 11 et 13 sont notées $CT_k$ et $CS_k$. On considère enfin une gamme donnée de P valeurs théoriques relatives à une qualité d'encodage visée notée comme suit :

$$\{Q_i \; avec \; i \in [\![1; P]\!]\}$$

En sortie du module 15 on a donc, pour chaque image $IM_{k,vi}$ et pour chaque qualité Qi, un débit vidéo $D_{k,i}$ définit comme suit :

$$D_{k,i} = F(Q_i, CT_k, CS_k)$$

Pour obtenir un débit vidéo global $D_{glo,i}$ pour la succession d'images et pour chaque qualité $Q_i$, on applique une formule de type :

$$D_{glo,i} = G(D_{1,i}, ..., D_{k,i}, ..., D_{N,i})$$

où : G est une fonction prédéterminée permettant d'obtenir un débit vidéo global en fonction de plusieurs débits vidéo.

Par exemple, le débit vidéo global est la moyenne arithmétique des débits vidéo :

$$D_{glo,i} = \frac{1}{N} \sum_{k=1}^{N} D_{k,i}$$

Bien entendu, d'autres modes de réalisation sont possibles. Par exemple le débit vidéo global peut être calculé par une moyenne géométrique, harmonique ou pondérée sur les débits vidéo ou par d'autres formules.

Comme expliqué précédemment, les courbes en trait discontinu sur la **Figure 3** représentent chacune la relation débit vidéo-qualité théorique respectivement de deux images d'une succession d'images d'une version caractérisée par une résolution 1920x1080. Le module 17 est agencé pour générer une courbe représentant la relation débit vidéo global-qualité théorique de la succession d'images de la version caractérisée par la résolution 1920×1080. Cette courbe est représentée en trait continu sur la **Figure 3.**

La mémoire 19 est configurée pour stocker des instructions sous la forme d'un programme informatique dont l'exécution par le processeur 21 se traduit par le fonctionnement du module d'analyse 3. Avantageusement, la mémoire 19 est configurée en outre pour stocker des données telles que la gamme de valeurs théoriques relatives à une qualité d'encodage visée, la fonction prédéterminée F et/ou des données relatives aux calculs et mesures réalisés par les modules 11, 13, 15 et 17.

Comme expliqué précédemment, le module d'analyse 3 est agencé en outre pour générer un ensemble de profils d'encodage du contenu multimédia source M. Un profil est caractérisé par une résolution et un débit vidéo, donc un débit vidéo global au sens des explications fournies précédemment. Par ailleurs, une qualité peut être associée à un couple formé par une valeur de résolution et une valeur de débit vidéo global, donc à un profil. Sur la **Figure 3,** un premier profil $P_1$ et un deuxième profil $P_2$ sont illustrés. Le premier profil $P_1$ est caractérisé par une résolution 1920x1080 et un débit vidéo global de 2955 kbps. La qualité théorique associée au premier profil $P_1$ est une distorsion de 24. Le deuxième profil $P_2$ est caractérisé par une résolution 1920x1080 et un débit vidéo global de 2258 kbps. La qualité théorique associée au deuxième profil $P_2$ est une distorsion de 32.

Le module de sélection 5 est agencé pour recevoir l'ensemble de profils d'encodage généré par le module d'analyse 3. Typiquement, l'ensemble de profils d'encodage comprend l'ensemble de couples de valeurs débit vidéo global-qualité théorique associé à chaque version, chaque version étant caractérisée par une résolution. Le module de sélection 5 est agencé en outre pour sélectionner au moins un groupe de profils d'encodage du contenu multimédia source M.

Comme illustré en **Figure 1,** le module de sélection 5 comprend une mémoire 23 et un processeur 25.

La mémoire 23 est configurée pour stocker des instructions sous la forme d'un programme informatique dont l'exécution par le processeur 25 se traduit par le fonctionnement du module de sélection 5.

Le module d'encodage 7 est agencé pour encoder le contenu multimédia source M en un ou plusieurs flux vidéo, chaque flux vidéo étant obtenu par encodage du contenu multimédia source M selon un profil d'encodage de l'au moins un groupe de profils d'encodage sélectionné par le module de sélection 5. Par ailleurs, le module d'encodage 7 est agencé en outre pour analyser la qualité des flux vidéo obtenu après encodage en vue de faire un retour au module d'analyse 3 et de modifier, si besoin, la fonction prédéterminée F.

Comme illustré en **Figure 1,** le module d'encodage 7 comprend un sous-module d'encodage 27, une unité de contrôle 29 et un module de communication 31. Le module d'encodage 7 comprend en outre une mémoire 33 et un processeur 35.

Le sous-module d'encodage 27 est agencé pour encoder le contenu multimédia source M en un ou plusieurs flux vidéo. Comme illustré en **Figure 1,** le sous-module d'encodage 27 a pour entrées à la fois le ou les groupes de profils sélectionnés par le module de sélection 5 et le contenu multimédia source M. On comprend que le sous-module d'encodage 27 est agencé pour générer autant de flux vidéo qu'il y a de profils dans le ou les groupe de profils sélectionnés. Chaque flux vidéo généré par le sous-module d'encodage 27 est un flux compressé selon un profil caractérisé par une résolution et un débit vidéo.

L'unité de contrôle 29 est agencée pour analyser chaque flux vidéo obtenu en sortie du sous-module d'encodage 27 pour déterminer la valeur effective de qualité d'encodage du profil d'encodage de chaque flux vidéo.

L'unité de contrôle 29 est agencée en outre pour comparer, pour chaque flux vidéo analysé, la valeur de qualité d'encodage effectivement obtenue avec la valeur théorique de qualité d'encodage visée du profil d'encodage correspondant.

Par exemple, en référence à nouveau à la **Figure 3,** la valeur théorique de qualité d'encodage pour le premier profil $P_1$ correspond à une distorsion de 24. Si le premier profil $P_1$ a été sélectionné par le module de sélection 5 et qu'un flux vidéo a été généré par encodage du contenu multimédia source M selon le premier profil $P_1$, l'unité de contrôle 29 est alors agencée pour comparer la valeur de qualité d'encodage obtenue avec la qualité théorique visée, à savoir la qualité correspondant à une distorsion de 24.

Par ailleurs, l'unité de contrôle 29 est agencée en outre pour transmettre les résultats de la comparaison effectuée pour chaque flux vidéo au module d'analyse 3.

Sur réception des résultats de la comparaison effectuée par l'unité de contrôle 29, le module d'analyse 3 est agencé en outre pour modifier la fonction prédéterminée F en vue d'améliorer ultérieurement la fiabilité du calcul de la gamme de valeurs de débit vidéo et l'obtention de l'ensemble de couples de valeurs débit vidéo-qualité théorique d'une image.

Dans un mode de réalisation, le module d'analyse 3 est configuré pour modifier la fonction prédéterminée F sur la base de la comparaison effectuée si la différence entre la valeur de qualité d'encodage obtenue pour un flux vidéo et la valeur théorique de qualité d'encodage visée du profil correspondant au flux vidéo est supérieure ou égale à un seuil prédéterminé. Il s'agit bien évidemment ici d'une différence absolue.

Par exemple, pour un PSNR moyenné sur une seconde, le seuil prédéterminé est typiquement de l'ordre de 1 dB. Dans ce cas de figure, on comprend donc que la fonction F prédéterminée est modifiée si la différence entre la valeur de qualité d'encodage obtenue pour un flux vidéo et la valeur théorique de qualité d'encodage visée du profil correspondant au flux vidéo est supérieure ou égale à 1dB.

L'homme du métier comprend aisément qu'il est également possible, dans un mode de réalisation, de modifier la fonction prédéterminée F quels que soient les résultats de la comparaison effectuée par l'unité de contrôle 29. Dans ce mode de réalisation, il n'y a donc pas de seuil prédéterminé et la fonction prédéterminée F est toujours modifiée sur la base de la comparaison effectuée. On peut également considérer de manière équivalente qu'il y a bien un seuil prédéterminé et que celui-ci est de valeur nulle.

Bien entendu, cette condition peut être vérifiée au niveau de l'unité de contrôle 29, et non au niveau du module d'analyse 3, de sorte que celle-ci est agencée pour transmettre les résultats de la comparaison au module d'analyse 3 seulement si la différence entre la qualité effectivement mesurée et la qualité théorique visée est supérieure ou égale à un seuil prédéterminée.

Comme expliqué précédemment, la fonction prédéterminée F peut être déterminée par la mise en oeuvre d'un algorithme d'apprentissage sur la base d'un ensemble de données d'entrainement relatives à l'encodage d'une pluralité de contenus multimédias d'entrainement selon différents profils d'encodage d'entrainement et à la mesure d'une valeur relative à la qualité de l'encodage suite à chaque encodage. Comme expliqué précédemment, la fonction prédéterminée F permet d'établir pour une image d'une succession d'images d'une version d'un contenu multimédia encodé selon une résolution donnée une relation entre d'une part un débit vidéo et d'autre part une valeur relative à la qualité d'encodage. Ainsi, pour une résolution donnée, on peut établir par des méthodes d'apprentissage connues la fonction prédéterminée F vérifiant pour chaque image dont les caractéristiques spatiale et temporelle sont connues la relation suivante :

$$D = F(Q, CT, CS)$$

où :

- D est la valeur de débit vidéo ;
- CT et CS sont respectivement les caractéristiques temporelle et spatiale de l'image considérée,
- Q est la valeur relative à la qualité d'encodage obtenue ; et
- F esr la fonction prédéterminée.

On comprend donc que l'implémentation de la méthode d'apprentissage implique de déterminer, pour chaque version obtenue par encodage d'un contenu multimédia, les caractéristiques spatiale et temporelles d'une ou plusieurs images de la succession d'images de manière à disposer de toutes les informations nécessaires à la détermination, par des méthodes connues, de la relation entre la résolution, le débit vidéo, la qualité et les caractéristiques spatiale et temporelle. Cette relation est établie au niveau de l'image.

Dans un tel mode de réalisation, la modification de la fonction prédéterminée F sur la base de la comparaison effectuée par l'unité de contrôle 29 comprend par exemple l'intégration d'un ensemble de nouvelles données relatives à l'encodage du contenu multimédia source M et à l'analyse du ou des flux vidéo obtenus, de sorte que les nouvelles données ont un poids supérieur à celle des données d'entrainement.

Autrement dit, les nouvelles données issues de la comparaison effectuée par l'unité de contrôle 29 sont ajoutées aux données d'entrainement tout en ayant un poids plus important que les données d'entrainement.

Le module de communication 31 est agencé pour émettre au moins un flux vidéo généré par le sous-module d'encodage 27 à destination d'un terminal de réception (non représenté sur la **Figure 1**).

La mémoire 33 est configurée pour stocker des instructions sous la forme d'un programme informatique dont l'exécution par le processeur 35 se traduit par le fonctionnement du module d'encodage 7.

Avantageusement, la mémoire 33 est configurée en outre pour stocker le ou les flux vidéo générés par le sous-module d'encodage 27 en vue d'une diffusion à la demande, et notamment une diffusion en direct, à un ou plusieurs terminaux de réception. La mémoire 33 peut être également configurée en outre pour stocker les données résultant de la comparaison réalisée par l'unité de contrôle 29.

Un procédé selon l'invention va maintenant être décrit en référence aux **Figures 4** et **5.**

Lors d'une première étape S1, le contenu multimédia source M est transmis au module d'analyse 3. Un ensemble de versions du contenu multimédia source M est alors généré, chaque version étant caractérisée par une résolution. Chaque version comprend une succession d'images. Par exemple, chaque version est générée par sous-échantillonnage du contenu multimédia source M.

Dans l'exemple illustré en **Figure 1,** trois versions V1, V2 et V3 du contenu multimédia source M ont été générées, chacune étant caractérisée par une résolution qui lui est propre. Par exemple, la version V1 est caractérisée par une résolution 1920x1080, la version V2 est caractérisée par une résolution 1280x720 et la version V3 est caractérisée par une résolution 832x468.

Chaque version générée est ensuite stockée dans une mémoire 9 du module d'analyse 3. Toujours dans le cas décrit ici, la version V1 est stockée dans la mémoire $9_{V1}$, la version V2 est stockée dans la mémoire $9_{V2}$ et la version V3 est stockée dans la mémoire $9_{V3}$. Comme expliqué précédemment, la mémoire 9 est par exemple une mémoire de type FIFO.

Lors d'une deuxième étape S2, le module 11 détermine, pour chaque image de la succession d'images d'une version, au moins une caractéristique temporelle.

Dans le cas illustré en **Figure 1,** le module $11_{V1}$ détermine au moins une caractéristique temporelle pour chaque image de la succession d'images de la version V1, le module $11_{V2}$ détermine au moins une caractéristique temporelle pour chaque image de la succession d'images de la version V2 et le module $11_{V3}$ détermine au moins une caractéristique temporelle pour chaque image de la succession d'images de la version V3.

Un mode de réalisation de la deuxième étape S2 de détermination d'au moins une caractéristique temporelle de chaque image est illustré en **Figure 5**.

Lors d'une première opération S21, le module 11 partitionne chaque image en un ensemble de blocs de pixels. On a par exemple représenté sur la **Figure 2** un premier bloc de pixels $B_1$ et un deuxième bloc de pixels $B_2$ de la k-ième image $IM_{k,vi}$ d'une version Vi du contenu multimédia source M.

Lors d'une deuxième opération S22, le module 11 réalise une estimation de mouvement sur chaque bloc de pixels de sorte que chaque bloc de pixels est caractérisé, après l'estimation de mouvement, par un vecteur de mouvement et par une mesure de la qualité de l'estimation de mouvement. En d'autres termes, l'image $IM_{k,vi}$ de la version Vi est comparée avec l'image précédente $IM_{k-1,Vi}$ de la même version Vi à partir de laquelle le mouvement du bloc $B_1$ par rapport au bloc $B_1$' est déterminé de même que le mouvement du bloc $B_2$ par rapport au bloc $B_2$'.

Dans le cas illustré en **Figure 2,** le bloc $B_1$ est ainsi caractérisé par un vecteur de mouvement **V[B₁]** tandis que le bloc $B_2$ est caractérisé par un vecteur de mouvement **V[B₂].**

Par ailleurs, la mesure de la qualité de l'estimation de mouvement est par exemple une somme des différences absolues.

En référence à nouveau à la **Figure 4,** lors d'une troisième étape S3, le module 13 détermine, pour chaque image de la succession d'images d'une version, au moins une caractéristique spatiale.

Dans le cas illustré en **Figure 1,** le module $13_{V1}$ détermine au moins une caractéristique spatiale pour chaque image de la succession d'images de la version V1, le module $13_{V2}$ détermine au moins une caractéristique spatiale pour chaque image de la succession d'images de la version V2 et le module $13_{V3}$ détermine au moins une caractéristique spatiale pour chaque image de la succession d'images de la version V3.

Un mode de réalisation de la troisième étape S3 de détermination d'au moins une caractéristique spatiale de chaque image est illustré en **Figure 5.**

Lors d'une première opération S31, le module 13 partitionne chaque image en un ensemble de blocs de pixels. Ce partitionnement est par exemple le même que celui réalisé lors de la détermination des caractéristiques temporelles.

Lors d'une deuxième opération S32, le module 13 mesure la variance de chaque bloc de pixels de l'image.

En référence à nouveau à la **Figure 4,** lors d'une quatrième étape S4, le module 15 calcule, pour chaque image de la succession d'images d'une version, une gamme de valeurs de débit vidéo. Chaque valeur de débit vidéo de cette gamme est calculée par application d'une fonction prédéterminée F à l'au moins une caractéristique temporelle de l'image, l'au moins une caractéristique spatiale de l'image et une valeur d'une gamme donnée de valeurs théoriques relatives à une qualité d'encodage visée de manière à obtenir, pour chaque image, un ensemble de couples de valeurs débit vidéo-qualité théorique.

En d'autres termes, le module 15 utilise lors de cette étape une fonction prédéterminée F et une gamme de valeurs théoriques relatives à une qualité d'encodage visée. Pour une image donnée, la fonction prédéterminée F a donc pour entrées une valeur théorique de qualité, la ou les caractéristiques temporelles de l'image considérée et la ou les caractéristiques spatiales de l'image considérée. L'application de cette fonction prédéterminée F permet d'obtenir une valeur de débit vidéo qui est donc associée à la valeur théorique de qualité sélectionnée. En effet, pour une même image, seule peut varier la valeur théorique de qualité d'encodage. La ou les caractéristiques temporelles et spatiales ne varient que d'une image à l'autre.

A l'issue de cette étape on a donc, pour chaque image de la succession d'images de chaque version du contenu multimédia source M, un ensemble de couples débit vidéo-qualité théorique. Par ailleurs cet ensemble de couples peut être représenté sous la forme d'une courbe débit vidéo-qualité théorique. Dans l'exemple illustré en **Figure 3,** la qualité est caractérisée par la distorsion et les deux courbes en trait discontinu représentent respectivement les courbes débit vidéo-qualité théorique de deux images d'une même version.

Dans le cas illustré en **Figure 1,** le module $15_{V1}$ détermine un ensemble de couples de valeurs débit vidéo-qualité théorique pour chaque image de la succession d'images de la version V1, le module $15_{V2}$ détermine un ensemble de couples de valeurs débit vidéo-qualité théorique pour chaque image de la succession d'images de la version V2 et le module $15_{V3}$ détermine un ensemble de couples de valeurs débit vidéo-qualité théorique pour chaque image de la succession d'images de la version V3.

Lors d'une cinquième étape S5, le module 17 calcule, pour une version et pour chaque valeur de la gamme donnée de valeurs théoriques de qualité d'encodage, un débit vidéo global. Ce débit vidéo global est fonction des débits vidéo associés à une même valeur théorique de qualité d'encodage pour chaque image de la succession d'images de la version de manière à obtenir, pour la version considérée, un ensemble de couples de valeurs débit vidéo global-qualité théorique.

En d'autres termes, pour une version donnée, le module 17 calcule un débit vidéo global pour chaque valeur de la gamme de valeurs théoriques relatives à une qualité d'encodage visée. En effet, pour chaque image, une valeur de débit vidéo associée à une valeur théorique de qualité est calculée par le module 15. Or, on souhaite avoir une seule valeur de débit vidéo, à savoir le débit vidéo global, pour l'ensemble de la succession d'images. Le module 17 calcule donc, au cours de cette étape, pour une version donnée et pour chaque valeur théorique de qualité, un débit vidéo global. Comme expliqué précédemment, le débit vidéo global associé à une valeur théorique de qualité est par exemple la moyenne arithmétique des valeurs de débit vidéo associées à cette même valeur théorique de qualité pour chaque image de la succession d'images.

A l'issue de cette étape on a donc, pour chaque version du contenu multimédia source M, un ensemble de couples débit vidéo global-qualité théorique. Par ailleurs cet ensemble de couples peut être représenté sous la forme d'une courbe débit vidéo global-qualité théorique. Dans l'exemple illustré en **Figure 3,** la qualité est caractérisée par la distorsion et la courbe en trait continu représente la courbe débit vidéo global-qualité théorique de la version caractérisée par la résolution 1920x1080.

Dans le cas illustré en **Figure 1,** le module $17_{V1}$ détermine un ensemble de couples de valeurs débit vidéo global-qualité théorique pour chaque image de la succession d'images de la version V1, le module $17_{V2}$ détermine un ensemble de couples de valeurs débit vidéo global-qualité théorique pour chaque image de la succession d'images de la version V2 et le module $17_{V3}$ détermine un ensemble de couples de valeurs débit vidéo global-qualité théorique pour chaque image de la succession d'images de la version V3.

Lors d'une sixième étape S6, le module de sélection 5 reçoit l'ensemble de couples débit vidéo global-qualité théorique de chaque version, c'est-à-dire l'ensemble de couples débit vidéo global-qualité théorique de chaque résolution. Le module de sélection 5 sélectionne alors au moins un groupe de profils d'encodage en fonction de l'ensemble de couples de valeurs débit vidéo global-qualité théorique de chaque version, chaque profil d'encodage étant caractérisé par une résolution et un débit vidéo global. Comme expliqué précédemment, chaque profil d'encodage est associé en outre à une valeur théorique de qualité d'encodage visée.

Le module de sélection 5 transmet ensuite le ou les groupes de profils d'encodage au module d'encodage 7.

Lors d'une septième étape S7, le module d'encodage 7 reçoit le ou les groupes de profils d'encodage transmis par le module de sélection 5. Le module d'encodage 7, et plus précisément le sous-module d'encodage 27, encode alors le contenu multimédia source M en un ou plusieurs flux vidéo, chaque flux vidéo étant obtenu par encodage du contenu multimédia source M selon un profil.

Lors d'une huitième étape S8, l'unité de contrôle 29 du module d'encodage 7 analyse chaque flux vidéo obtenu pour déterminer la valeur de qualité d'encodage du profil d'encodage du flux vidéo. Cette valeur mesurée est donc la valeur effective, réelle, de la qualité d'encodage du profil d'encodage du flux vidéo et peut donc être différente de la valeur théorique de la gamme de valeurs théoriques relatives à une qualité d'encodage visée.

Lors d'une neuvième étape S9, l'unité de contrôle 29 compare donc, pour chaque flux vidéo analysé, la valeur de qualité d'encodage effectivement obtenue avec la valeur théorique de qualité d'encodage visée du profil d'encodage correspondant. Les résultats de la comparaison sont ensuite transmis au module d'analyse 3.

Lors d'une dixième étape S10, sur la base de la comparaison effectuée, le module d'analyse 3 modifie la fonction prédéterminée F en vue d'améliorer ultérieurement la fiabilité du calcul de la gamme de valeurs de débit vidéo et l'obtention de l'ensemble de couples de valeurs débit vidéo-qualité théorique d'une image. On obtient alors une nouvelle fonction prédéterminée F'.

Dans un mode de réalisation, la fonction prédéterminée F est modifiée sur la base de la comparaison effectuée si la différence entre la valeur de qualité d'encodage obtenue pour un flux vidéo et la valeur théorique de qualité d'encodage visée du profil correspondant au flux vidéo est supérieure ou égale à un seuil prédéterminé. Comme expliqué précédemment, il est évident pour l'homme du métier qu'il s'agit ici d'une différence absolue.

Par exemple, lors de l'étape précédente S9, les résultats de la comparaison ne sont transmis au module d'analyse 3 que si la différence entre la valeur théorique de qualité visée et la valeur réelle de qualité effectivement mesurée est supérieure ou égale à ce seuil prédéterminé.

Comme expliqué précédemment, la fonction prédéterminée F peut être déterminée par la mise en oeuvre d'un algorithme d'apprentissage sur la base d'un ensemble de données d'entrainement relatives à l'encodage d'une pluralité de contenus multimédias d'entrainement selon différents profils d'encodage d'entrainement et à la mesure d'une valeur relative à la qualité de l'encodage suite à chaque encodage. Dans un tel mode de réalisation, le module d'analyse 3 modifie la fonction prédéterminée F sur la base de la comparaison effectuée par l'unité de contrôle 29 en intégrant l'ensemble des nouvelles données relatives à l'encodage du contenu multimédia source M et à l'analyse du ou des flux vidéo obtenus, de sorte que les nouvelles données ont un poids supérieur à celle des données d'entrainement.

Par exemple, si l'algorithme d'apprentissage comprend une méthode des moindres carrés, la nouvelle fonction prédéterminée F' peut être déterminée en utilisant une équation des moindres carrés pondérée pour combiner les données d'entrainement initiales avec les nouvelles données résultant des mesures sur le ou les flux vidéo obtenus au niveau du module d'encodage 9 en donnant, par exemple, davantage d'importance à ces nouvelles données.

La présente invention présente plusieurs avantages.

L'utilisation d'une fonction prédéterminée pour générer un ensemble de couples débit vidéo global-qualité théorique pour différentes versions du contenu multimédia source permet d'obtenir un ensemble de profils d'encodage potentiels sans avoir à encoder le contenu multimédia source pour évaluer la qualité de chaque encodage. En effet, aucun encodage n'est réalisé au niveau du module d'analyse. Le seul traitement du contenu multimédia source consiste à générer plusieurs versions de ce contenu à différentes résolutions. La fonction prédéterminée, déterminée par apprentissage, permet ainsi d'anticiper et d'estimer avec une certaine fiabilité la qualité d'un encodage sans avoir à mettre en oeuvre effectivement cet encodage. Cette passe d'analyse rapide puisque mise en oeuvre sans encodage est adaptée à un contexte de diffusion en direct.

Par ailleurs, le contrôle de la qualité des flux vidéo générés par encodage selon différents profils d'encodage au niveau du module d'encodage permet d'améliorer les performances de la fonction prédéterminée tout en s'assurant de la qualité des flux vidéo générés et destinés à être diffusés aux utilisateurs de terminaux de réception.

Enfin, grâce au procédé et au système visés, non seulement l'encodage n'est pas nécessaire mais en plus la qualité est une variable d'entrée de la fonction prédéterminée et non la sortie, d'où la possibilité de déterminer le profil permettant d'obtenir la qualité souhaitée. A l'inverse, lorsqu'un encodage est réalisé en amont, l'analyse de cet encodage permet de connaître la qualité d'encodage d'un profil testé mais ne permet pas, pour une valeur de qualité souhaitée, de déterminer le profil correspondant.

**Revendications**

1. Procédé mis en oeuvre par des moyens informatiques pour encoder numériquement un contenu multimédia source (M) en un ou plusieurs flux vidéo pour une diffusion à la demande à au moins un terminal de réception, le procédé comprenant les étapes suivantes:

- générer (S1) un ensemble de versions (Vi) dudit contenu multimédia, chaque version étant **caractérisée par** une résolution et comprenant une succession d'images,
- déterminer (S2, S3), pour chaque image de la succession d'images de chaque version, au moins une caractéristique temporelle et au moins une caractéristique spatiale,
- calculer (S4), pour chaque image de la succession d'images de chaque version, une gamme de valeurs de débit vidéo, chaque valeur de débit vidéo étant calculée par application d'une fonction prédéterminée (F) à l'au moins une caractéristique temporelle de ladite image, l'au moins une caractéristique spatiale de ladite image et une valeur d'une gamme donnée de valeurs théoriques relatives à une qualité d'encodage visée de manière à obtenir, pour chaque image, un ensemble de couples de valeurs débit vidéo-qualité théorique,
- calculer (S5), pour chaque version et pour chaque valeur de la gamme donnée de valeurs théoriques de qualité d'encodage, un débit vidéo global fonction des débits vidéo associés à ladite valeur théorique de qualité d'encodage pour chaque image de la succession d'images de ladite version de manière à obtenir, pour chaque version, un ensemble de couples de valeurs débit vidéo global-qualité théorique
- sélectionner (S6) au moins un groupe de profils d'encodage en fonction de l'ensemble de couples de valeurs débit vidéo global-qualité théorique de chaque version, chaque profil d'encodage étant **caractérisé par** une résolution et un débit vidéo global,
- encoder (S7) le contenu multimédia en un ou plusieurs flux vidéo, chaque flux vidéo étant obtenu par encodage dudit contenu multimédia selon un profil de l'au moins un groupe de profil sélectionné,
- analyser (S8) chaque flux vidéo obtenu pour déterminer la valeur de qualité d'encodage du profil d'encodage dudit flux vidéo,
- comparer (S9), pour chaque flux vidéo analysé, la valeur de qualité d'encodage effectivement obtenue avec la valeur théorique de qualité d'encodage visée du profil d'encodage correspondant, et
- sur la base de la comparaison effectuée, modifier (S10) la fonction prédéterminée en vue d'améliorer ultérieurement la fiabilité du calcul de la gamme de valeurs de débit vidéo et l'obtention de l'ensemble de couples de valeurs débit vidéo-qualité théorique d'une image.

2. Procédé selon la revendication 1, dans lequel chaque image comprend une matrice de pixels, la détermination d'au moins une caractéristique temporelle d'une image de la succession d'images d'une version comprenant :

- partitionner (S21) ladite image en un ensemble de blocs de pixels, et
- réaliser (S22) une estimation de mouvement sur chaque bloc de pixels de sorte que chaque bloc de pixels est caractérisé, après ladite estimation de mouvement, par un vecteur de mouvement et par une mesure de la qualité de l'estimation de mouvement,

l'au moins une caractéristique temporelle de l'image comprenant les vecteurs de mouvement respectifs des blocs de pixels de ladite image et les mesures de qualité associées.

3. Procédé selon la revendication 2, dans lequel la qualité de l'estimation de mouvement comprend une somme des différences absolues.

4. Procédé selon l'une des revendications précédentes, dans lequel chaque image comprend une matrice de pixels, la détermination d'au moins une caractéristique spatiale d'une image de la succession d'images d'une version comprenant :

   - partitionner (S31) ladite image en un ensemble de blocs de pixels, et
   - mesurer (S32) la variance de chaque bloc de pixels de ladite image,

   l'au moins une caractéristique spatiale de l'image comprenant les variances respectives des blocs de pixels de ladite image.

5. Procédé selon l'une des revendications précédentes, dans lequel la fonction prédéterminée est déterminée par la mise en oeuvre d'un algorithme d'apprentissage sur la base d'un ensemble de données d'entraînement relatives à l'encodage d'une pluralité de contenus multimédias d'entrainement selon différents profils d'encodage d'entrainement, chaque profil d'encodage d'entrainement étant **caractérisé par** une résolution et un débit vidéo global, et à la mesure d'une valeur relative à la qualité de l'encodage suite à chaque encodage.

6. Procédé selon la revendication 5, dans lequel l'algorithme d'apprentissage utilise un modèle de réseau de neurones.

7. Procédé selon l'une des revendications précédentes, dans lequel le débit vidéo global associé à une version et à une valeur de la gamme donnée de valeurs théoriques de qualité d'encodage est une moyenne des débits vidéo associés à ladite valeur théorique de qualité d'encodage pour chaque image de la succession d'images de ladite version.

8. Procédé selon l'une des revendications précédentes, dans lequel la fonction prédéterminée est modifiée sur la base de la comparaison effectuée si la différence entre la valeur de qualité d'encodage obtenue pour un flux vidéo et la valeur théorique de qualité d'encodage visée du profil correspondant audit flux vidéo est supérieure ou égale à un seuil prédéterminé.

9. Procédé selon l'une des revendications précédentes, dans lequel la fonction prédéterminée est déterminée par la mise en oeuvre d'un algorithme d'apprentissage sur la base d'un ensemble de données d'entrainement relatives à l'encodage d'une pluralité de contenus multimédias d'entrainement selon différents profils d'encodage d'entrainement et à la mesure d'une valeur relative à la qualité de l'encodage suite à chaque encodage, la modification de la fonction prédéterminée sur la base de la comparaison effectuée comprenant l'intégration d'un ensemble de nouvelles données relatives à l'encodage du contenu multimédia source et à l'analyse du ou des flux vidéo obtenus, lesdites nouvelles données ayant un poids supérieur à celle des données d'entrainement.

10. Programme informatique comprenant des instructions pour la mise en oeuvre du procédé selon l'une des revendications précédentes, lorsque lesdites instructions sont exécutées par au moins un processeur (21, 25, 35).

11. Système (1) pour encoder numériquement un contenu multimédia source (M) en un ou plusieurs flux vidéo pour une diffusion à la demande à au moins un terminal de réception, ledit système comprenant :

   - un module d'analyse (3) agencé pour :

      o générer un ensemble de versions (Vi) dudit contenu multimédia, chaque version étant **caractérisée par** une résolution et comprenant une succession d'images,
      o déterminer, pour chaque image de la succession d'images de chaque version, au moins une caractéristique temporelle et au moins une caractéristique spatiale,
      o calculer, pour chaque image de la succession d'images de chaque version, une gamme de valeurs de débit vidéo, chaque valeur de débit vidéo étant calculée par application d'une fonction prédéterminée (F) à l'au moins une caractéristique temporelle de ladite image, l'au moins une caractéristique spatiale de ladite image et une valeur d'une gamme donnée de valeurs théoriques relatives à une qualité d'encodage visée de manière à obtenir, pour chaque image, un ensemble de couples de valeurs débit vidéo-qualité théorique,
      o calculer, pour chaque version et pour chaque valeur de la gamme donnée de valeurs théoriques de qualité d'encodage, un débit vidéo global fonction des débits vidéo associés à ladite valeur théorique de qualité d'encodage pour chaque image de la succession d'images de ladite version de manière à obtenir, pour chaque version, un ensemble de couples de valeurs débit vidéo global-qualité théorique,

- un module de sélection (5) agencé pour recevoir l'ensemble de couples de valeurs débit vidéo global-qualité théorique associé à chaque version, ledit module de sélection étant agencé en outre pour sélectionner au moins un groupe de profils d'encodage du contenu multimédia, chaque profil d'encodage étant **caractérisé par** une résolution et un débit vidéo global, et

- un module d'encodage (7) agencé pour :

  o encoder le contenu multimédia en un ou plusieurs flux vidéo, chaque flux vidéo étant obtenu par encodage dudit contenu multimédia selon un profil d'encodage de l'au moins un groupe de profils d'encodage sélectionné par le module de sélection,
  o analyser chaque flux vidéo obtenu pour déterminer la valeur de qualité d'encodage du profil d'encodage dudit flux vidéo,
  o comparer, pour chaque flux vidéo analysé, la valeur de qualité d'encodage effectivement obtenue avec la valeur théorique de qualité d'encodage visée du profil d'encodage correspondant, et
  o transmettre les résultats de ladite comparaison au module d'analyse,

le module d'analyse étant agencé en outre pour, sur la base de la comparaison effectuée, modifier la fonction prédéterminée en vue d'améliorer ultérieurement la fiabilité du calcul de la gamme de valeurs de débit vidéo et l'obtention de l'ensemble de couples de valeurs débit vidéo-qualité théorique d'une image.

**Patentansprüche**

1. Von Computereinrichtungen durchgeführtes Verfahren zum digitalen Kodieren eines Quellen-Multimediainhalts (M) in einen oder mehrere Videoflüsse für eine Sendung auf Anfrage zu mindestens einem Empfangsendgerät, wobei das Verfahren die folgenden Schritte aufweist:

   - Generieren (S1) eines Satzes von Versionen (Vi) des Multimediainhalts, wobei jede Version durch eine Auflösung gekennzeichnet ist und eine Folge von Bildern aufweist,
   - für jedes Bild der Bildfolge jeder Version, Bestimmen (S2, S3) mindestens eines Zeitmerkmals und mindestens eines Raummerkmals,
   - für jedes Bild der Bildfolge jeder Version, Berechnen (S4) eines Bereichs von Video-bitratewerten, wobei jeder Videobitratewert durch Anwendung einer vorgegebenen Funktion (F) auf das mindestens eine Zeitmerkmal des Bilds, das mindestens eine Raummerkmal des Bilds und einen Wert eines gegebenen Bereichs von theoretischen Werten, die eine Ziel-Kodierungsqualität repräsentieren, berechnet wird, um für jedes Bild einen Satz von Wertepaaren Videobitrate/theoretische Qualität zu gewinnen,
   - für jede Version und für jeden Wert des gegebenen Bereichs von theoretischen Kodierungsqualitätswerten, Berechnen (S5) einer globalen Videobitrate-Funktion der dem theoretischen Kodierungsqualitätswert zugeordneten Videobitraten für jedes Bild der Bildfolge jeder Version, um für jede Version einen Satz von Wertepaaren globale Videobitrate/theoretische Qualität zu gewinnen,
   - Wählen (S6) mindestens einer Gruppe von Kodierungsprofilen als Funktion des Satzes von Wertepaaren globale Videobitrate/theoretische Qualität jeder Version, wobei jedes Kodierungsprofil durch eine Auflösung und eine globale Videobitrate gekennzeichnet ist,
   - Kodieren (S7) des Multimediainhalts in einen oder mehrere Videoflüsse, wobei jeder Videofluss durch Kodierung des Multimediainhalts gemäß einem Profil der mindestens einen gewählten Profilgruppe gewonnen wird,
   - Analysieren (S8) jedes gewonnenen Videoflusses, um den Kodierungsqualitätswert des Kodierungsprofils des Videoflusses zu bestimmen,
   - für jeden analysierten Videofluss, Vergleichen (S9) des tatsächlich gewonnenen Kodierungsqualitätswerts mit dem theoretischen Ziel-Kodierungsqualitätswert des entsprechenden Kodierungsprofils, und
   - auf Basis des durchgeführten Vergleichs, Modifizieren (S10) der vorgegebenen Funktion in Hinblick darauf, die Zuverlässigkeit der Berechnung des Videobitrate-Wertebereichs und die Gewinnung des Satzes von Wertepaaren Videobitrate/theoretische Qualität eines Bilds nachträglich zu verbessern.

2. Verfahren nach Anspruch 1, in welchem jedes Bild eine Pixelmatrix aufweist, wobei die Bestimmung mindestens eines Zeitmerkmals eines Bilds der Bildfolge einer Version aufweist:

   - Unterteilen (S21) des Bilds in einen Satz von Pixelblöcken, und
   - Durchführen (S22) einer Bewegungsschätzung an jedem Pixelblock, derart, dass nach der Bewegungsschätzung jeder Pixelblock durch einen Bewegungsvektor und durch ein Maß der Qualität der Bewegungsschätzung gekennzeichnet ist,

wobei das mindestens eine Zeitmerkmal des Bilds die jeweiligen Bewegungsvektoren der Pixelblöcke des Bilds und die zugehörigen Qualitätsmaße aufweist.

3. Verfahren nach Anspruch 2, in welchem die Qualität der Bewegungsschätzung eine Summe von absoluten Differenzen aufweist.

4. Verfahren nach einem der vorstehenden Ansprüche, in welchem jedes Bild eine Pixelmatrix aufweist, wobei die Bestimmung mindestens eines Raummerkmals eines Bilds der Bildfolge einer Version aufweist:

     - Unterteilen (S31) des Bilds in einen Satz von Pixelblöcken, und
     - Messen (S32) der Varianz jedes Pixelblocks des Bilds,

wobei das mindestens eine Raummerkmal des Bilds die jeweiligen Varianzen der Pixelblöcke des Bilds aufweist.

5. Verfahren nach einem der vorstehenden Ansprüche, in welchem die vorgegebene Funktion bestimmt wird durch das Durchführen eines Lernalgorithmus auf Basis eines Satzes von Trainingsdaten, die die Kodierung mehrerer Trainings-Multimediainhalte gemäß unterschiedlichen Trainings-Kodierungsprofilen, wobei jedes Trainings-Kodierungsprofil durch eine Auflösung und eine globale Videobitrate gekennzeichnet ist, und das Messen eines die Qualität der Kodierung repräsentierenden Werts im Anschluss an jede Kodierung repräsentieren.

6. Verfahren nach Anspruch 5, in welchem der Lernalgorithmus ein Neuronales-Netz-Modell verwendet.

7. Verfahren nach einem der vorstehenden Ansprüche, in welchem die einer Version und einem Wert des gegebenen Bereichs von theoretischen Kodierungsqualitätswerten zugeordnete globale Videobitrate ein Mittelwert der dem theoretischen Kodierungsqualitätswert zugeordneten Videobitraten für jedes Bild der Bildfolge der Version ist.

8. Verfahren nach einem der vorstehenden Ansprüche, in welchem die vorgegebene Funktion auf Basis des durchgeführten Vergleichs modifiziert wird, falls die Differenz zwischen dem für einen Videofluss gewonnenen Kodierungsqualitätswert und dem theoretischen Ziel-Kodierungsqualitätswert des dem Videofluss entsprechenden Profils größer oder gleich einer vorgegebenen Schwelle ist.

9. Verfahren nach einem der vorstehenden Ansprüche, in welchem die vorgegebene Funktion bestimmt wird durch Durchführen eines Lernalgorithmus auf Basis eines Satzes von Trainingsdaten, die die Kodierung mehrerer Trainings-Multimediainhalte gemäß unterschiedlichen Trainings-Kodierungsprofilen und das Messen eines die Qualität der Kodierung repräsentierenden Werts im Anschluss an jede Kodierung repräsentieren, wobei die Modifikation der vorgegebenen Funktion auf Basis des durchgeführten Vergleichs die Integration eines Satzes neuer Daten aufweist, die die Kodierung des Quellen-Multimediainhalts und die Analyse des oder der gewonnenen Videoflüsse repräsentieren, wobei die neuen Daten ein größeres Gewicht haben als die Trainingsdaten.

10. Computerprogramm aufweisend Befehle zum Durchführen des Verfahrens nach einem der vorstehenden Ansprüche, wenn die Befehle von mindestens einem Prozessor (21, 25, 35) ausgeführt werden.

11. System (1) zum digitalen Kodieren eines Quellen-Multimediainhalts (M) in einen oder mehrere Videoflüsse für eine Sendung auf Anfrage zu mindestens einem Empfangsendgerät, wobei das System aufweist:

     - ein Analysemodul (3) zum:

         * Generieren eines Satzes von Versionen (Vi) des Multimediainhalts, wobei jede Version durch eine Auflösung gekennzeichnet ist und eine Folge von Bildern aufweist,
         * für jedes Bild der Bildfolge jeder Version, Bestimmen mindestens eines Zeitmerkmals und mindestens eines Raummerkmals,
         * für jedes Bild der Bildfolge jeder Version, Berechnen eines Bereichs von Videobitratewerten, wobei jeder Videobitratewert durch Anwendung einer vorgegebenen Funktion (F) auf das mindestens eine Zeitmerkmal des Bilds, das mindestens eine Raummerkmal des Bilds und einen Wert eines gegebenen Bereichs von theoretischen Werten, die eine Ziel-Kodierungsqualität repräsentieren, berechnet wird, um für jedes Bild einen Satz von Wertepaaren Videobitrate/theoretische Qualität zu gewinnen,
         * für jede Version und für jeden Wert des gegebenen Bereichs von theoretischen Kodierungsqualitätswerten, Berechnen einer globalen Videobitrate-Funktion der dem theoretischen Kodierungsqualitätswert zugeordneten Videobitraten für jedes Bild der Bildfolge jeder Version, um für jede Version einen Satz von Wertepaaren globale Videobitrate/theoretische Qualität zu gewinnen,

     - ein Auswahlmodul (5) zum Empfangen des jeder Version zugeordneten Satzes von Wertepaaren globale Videobitrate/theoretische Qualität, wobei das Auswahlmodul außerdem konfiguriert ist, um mindestens eine Gruppe von Kodierungsprofilen zum Kodieren des Multimediainhalts zu wählen, wobei jedes Kodierungsprofil durch eine Auflösung und eine globale Videobitrate gekennzeichnet ist, und

- ein Kodierungsmodul (7) zum

    * Kodieren des Multimediainhalts in einen oder mehrere Videoflüsse, wobei jeder Videofluss durch Kodierung des Multimediainhalts gemäß einem Kodierungsprofil der mindestens einen von dem Auswahlmodul gewählten Kodierungsprofilgruppe gewonnen wird,
    * Analysieren jedes gewonnenen Videoflusses, um den Kodierungsqualitätswert des Kodierungsprofils des Videoflusses zu bestimmen,
    * für jeden analysierten Videofluss, Vergleichen des tatsächlich gewonnenen Kodierungsqualitätswerts mit dem theoretischen Ziel-Kodierungsqualitätswert des entsprechenden Kodierungsprofils, und
    * Schicken der Ergebnisse des Vergleichs zu dem Analysemodul,

wobei das Analysemodul außerdem konfiguriert ist, um auf Basis des durchgeführten Vergleichs die vorgegebene Funktion in Hinblick darauf zu modifizieren, die Zuverlässigkeit der Berechnung des Videobitrate-Wertebereichs und die Gewinnung des Satzes von Wertepaaren Videobitrate/theoretische Qualität eines Bilds nachträglich zu verbessern.

## Claims

1. A method implemented by computer means to digitally encode source multimedia content (M) into one or several video stream(s) for on-demand broadcast to at least one reception terminal, the method comprising the following steps:

    - generating (S1) a set of versions (Vi) of said multimedia content, each version being **characterised by** a resolution and comprising a succession of images,
    - determining (S2, S3), for each image of the succession of images of each version, at least one temporal characteristic and at least one spatial characteristic,
    - computing (S4), for each image of the succession of images of each version, a range of video bitrate values, each video bitrate value being computed by application of a predetermined function (F) to the at least one temporal characteristic of said image, the at least one spatial characteristic of said image and a value of a given range of theoretical values relating to a target encoding quality so as to obtain, for each image, a set of pairs of video bitrate-quality theoretical values,

- computing (S5), for each version and for each value of the given range of encoding quality theoretical values, an overall video bitrate as a function of the video bitrates associated with said encoding quality theoretical value for each image of the succession of images of said version so as to obtain, for each version, a set of pairs of overall video bitrate-quality theoretical values,
- selecting (S6) at least one group of encoding profiles as a function of the set of pairs of overall video bitrate-quality theoretical values of each version, each encoding profile being **characterised by** a resolution and an overall video bitrate,
- encoding (S7) the multimedia content into one or several video stream(s), each video stream being obtained by encoding said multimedia content according to a profile of the at least one selected profile group,
- analysing (S8) each obtained video stream to determine the encoding quality value of the encoding profile of said video stream,
- comparing (S9), for each analysed video stream, the encoding quality value actually obtained with the target encoding quality theoretical value of the corresponding encoding profile, and
- based on the performed comparison, modifying (S10) the predetermined function to subsequently improve the reliability of the computation of the range of video bitrate values and the obtainment of the set of pairs of video bitrate-quality theoretical values of an image.

2. The method according to claim 1, wherein each image comprises an array of pixels, the determination of at least one temporal characteristic of an image of the succession of images of one version comprising:

    - partitioning (S21) said image into a set of blocks of pixels, and
    - carrying out (S22) a motion estimate on each block of pixels so that each block of pixels is characterised, after said motion estimate, by a motion vector and by a measurement of the quality of the motion estimate,

the at least one temporal characteristic of the image comprising the respective motion vectors of the blocks of pixels of said image and the associated quality measurements.

3. The method according to claim 2, wherein the quality of the movement estimate comprises a sum of the absolute differences.

4. The method according to one of the preceding claims, wherein each image comprises an array of pixels, the determination of at least one spatial characteristic of an image of the succession of images of one version comprising:

> - partitioning (S31) said image into a set of blocks of pixels, and
> - measuring (S32) the variance of each block of pixels of said image,

the at least one spatial characteristic of the image comprising the respective variances of the blocks of pixels of said image.

5. The method according to one of the preceding claims, wherein the predetermined function is determined by the implementation of a learning algorithm based on a set of training data relating to the encoding of a plurality of training multimedia contents according to different training encoding profiles, each training encoding profile being **characterised by** a resolution and an overall video bitrate, and by the measurement of a value relating to the quality of the encoding following each encoding.

6. The method according to claim 5, wherein the learning algorithm uses a neural network model.

7. The method according to one of the preceding claims, wherein the overall video bitrate associated with a version and with a value of the given range of theoretical encoding quality values is an average of the video bitrates associated with said encoding quality theoretical value for each image of the succession of images of said version.

8. The method according to one of the preceding claims, wherein the predetermined function is modified based on the performed comparison if the difference between the encoding quality value obtained for a video stream and the target encoding quality theoretical value of the profile corresponding to said video stream is higher than or equal to a predetermined threshold.

9. The method according to one of the preceding claims, wherein the predetermined function is determined by the implementation of a learning algorithm based on a set of training data relating to the encoding of a plurality of training multimedia contents according to different training encoding profiles and to the measurement of a value relating to the quality of the encoding following each encoding, the modification of the predetermined function based on the performed comparison comprising the integration of a set of new data relating to the encoding of the source multimedia content and to the analysis of the obtained video stream(s), said new data having a greater weight than that of the training data.

10. A computer program comprising instructions for the implementation of the method according to one of the preceding claims, when said instructions are executed by at least one processor (21, 25, 35).

11. A system (1) to digitally encode a source multimedia content (M) into one or several video stream(s) for on-demand broadcast to at least one reception terminal, said system comprising:

> - an analysis module (3) arranged to:
>
>> o generate a set of versions (Vi) of said multimedia content, each version being **characterised by** a resolution and comprising a succession of images,
>> o determine, for each image of the succession of images of each version, at least one temporal characteristic and at least one spatial characteristic,
>> o compute, for each image of the succession of images of each version, a range of video bitrate values, each video bitrate value being computed by application of a predetermined function (F) to the at least one temporal characteristic of said image, the at least one spatial characteristic of said image and a value of a given range of theoretical values relating to a target encoding quality so as to obtain, for each image, a set of pairs of video bitrate-quality theoretical values,
>> o compute, for each version and for each value of the given range of encoding quality theoretical values, an overall video bitrate as a function of the video bitrates associated with said encoding quality theoretical value for each image of the succession of images of said version so as to obtain, for each version, a set of pairs of overall video bitrate-quality theoretical values,
>
> - a selection module (5) arranged to receive the set of pairs of overall video bitrate-quality theoretical values associated with each version, said selection module being further arranged to select at least one group of multimedia content encoding profiles, each encoding profile being **characterised by** a resolution and an overall video bitrate, and
> - an encoding module (7) arranged to:

o encode the multimedia content into one or several video stream(s), each video stream being obtained by encoding said multimedia content according to an encoding profile of the at least one group of encoding profiles selected by the selection module,

o analyse each obtained video stream to determine the encoding quality value of the encoding profile of said video stream,

o compare, for each analysed video stream, the encoding quality value actually obtained with the target encoding quality theoretical value of the corresponding encoding profile, and

o emit the results of said comparison to the analysis module,

the analysis module being further arranged to modify, based on the performed comparison, the predetermined function to subsequently improve the reliability of the computation of the range of video bitrate values and the obtainment of the set of pairs of video bitrate-quality theoretical values of an image.

FIG. 1

FIG. 2

FIG. 3

EP 3 582 500 B1

FIG. 4

FIG. 5

## EP 3 582 500 B1

### RÉFÉRENCES CITÉES DANS LA DESCRIPTION

**Documents brevets cités dans la description**

- WO 2014133745 A